# EUROPÄISCHE PATENTSCHRIFT

(11) **EP 0 793 590 B1**
(45) Veröffentlichungstag und Bekanntmachung des Hinweises auf die Patenterteilung: **29.05.2002**
(21) Anmeldenummer: 96924763.4
(22) Anmeldetag: 18.07.1996
(51) Int. Cl.: B60T 8/48, B60T 8/42, B60T 8/26

(54) **HYDRAULISCHE FAHRZEUGBREMSANLAGE MIT BLOCKIERSCHUTZEINRICHTUNG**
HYDRAULIC VEHICLE BRAKING SYSTEM WITH ANTI-LOCK ARRANGEMENT
SYSTEME DE FREINAGE HYDRAULIQUE A DISPOSITIF ANTIBLOCAGE POUR VEHICULES

(30) Priorität: 29.09.1995 DE 19536329; 24.04.1996 DE 19616355
(43) Veröffentlichungstag der Anmeldung: 10.09.1997
(73) Patentinhaber: ROBERT BOSCH GMBH, 70442 Stuttgart (DE)
(72) Erfinder: JONNER, Wolf-Dieter, D-71717 Beilstein (DE); WOLFF, Günter, D-71701 Schwieberdingen (DE); WILDE, Werner, D-71701 Schwieberdingen (DE); TISCHER, Michael, D-74232 Abstatt (DE); BREITENBACHER, Jürgen, D-73650 Winterbach (DE); WETZEL, Gerhard, D-70825 Korntal-Münchingen (DE); HEINSOHN, Rainer, D-71732 Tamm (DE); KLUG, Andreas, D-71229 Leonberg (DE); KAESS, Hermann, D-71732 Tamm (DE); ZEINER, Peter, D-70565 Stuttgart (DE); SCHMIDT, Klaus, D-71696 Möglingen (DE); OTT, Harald, D-71254 Ditzingen (DE)
(86) Internationale Anmeldenummer: DE9601351
(87) Internationale Veröffentlichungsnummer: WO9712791

(56) Entgegenhaltungen:
- EP-A- 0 369 412
- EP-A- 0 482 379
- WO-A-93/08055
- WO-A-93/25417
- WO-A-97/04998
- DE-A- 2 154 806
- DE-A- 4 121 470
- DE-C- 4 232 311
- US-A- 4 875 741
- US-A- 5 441 336
- PATENT ABSTRACTS OF JAPAN vol. 18, no. 576 (M-1697), 4.November 1994 & JP 06 211120 A (AISIN SEIKI)
- PATENT ABSTRACTS OF JAPAN vol. 94, no. 010 & JP 06 298064 A (AISIN SEIKI CO LTD), 25.Oktober 1994,

## Beschreibung

### Stand der Technik

Die Erfindung betrifft eine hydraulische Fahrzeugbremsanlage mit einer Blockierschutzeinrichtung.

Durch die Druckschrift DE 4 422 518 A1 ist eine die Gattung bildende hydraulische Fahrzeugbremsanlage bekannt mit einem zweikreisigen Hauptbremszylinder, mit zwei Bremskreisen in Diagonal-Aufteilung für zwei Vorderradbremsen und zwei Hinterradbremsen und mit einer in die Bremskreise eingebauten Blockierschutzeinrichtung, die je Bremskreis eine Rückförderpumpe mit einem Eingang und einem Ausgang und ein erstes und ein zweites elektrisch steuerbares Ventil aufweist, wobei die Ventile als normal offenstehende Ventile ausgebildet sind, wobei das erste Ventil zwischen dem Hauptbremszylinder und der jeweiligen Vorderradbremse angeordnet ist und wobei das jeweilige zweite Ventil mit der jeweiligen Hinterradbremse verbunden ist. Dabei verbindet das jeweilige zweite Ventil normalerweise die Hinterradbremse eines Bremskreises mit der bremskreisgleichen Vorderradbremse. Dies hat im Blockierschutzbetrieb den Nachteil, daß ein Bremsdruck in der Hinterradbremse nicht höher ansteigen kann als ein Bremsdruck in der Vorderradbremse. Wollte man in der Hinterradbremse den Bremsdruck über einen zulässigen Vorderradbremsdruck steigern, so müßte man kurzzeitig das Vorderrad überbremsen mit der Folge von gegebenenfalls unzulässigem Bremsschlupf, Verlust von Lenkbarkeit und übermäßigem Reifenverschleiß. Der Wunsch nach einem gegenüber dem Bremsdruck einer Vorderradbremse höheren Bremsdruck der Hinterradbremse ist beispielsweise dadurch bedingt, daß beim Loslassen des Gaspedals ein den Vorderrädern zugeordneter Antriebsmotor des Fahrzeugs bremsend auf die Vorderräder wirkt, was insbesondere über Schnee und Glatteis ab einer Betätigung des Bremspedals schnell zu einer Vorderradblockiergefahr führen kann. Ein weiterer Grund für den Wunsch nach einem relativ zum Bremsdruck in einer Vorderradbremse höheren Bremsdruck in einer Hinterradbremse liegt darin, daß über wenig griffiger Fahrbahn und dem gemäß geringerer möglicher Fahrzeugverzögerung die Hinterräder einen relativ höheren Beitrag zur Fahrzeugverzögerung liefern können als dies über griffiger Fahrbahn möglich ist.

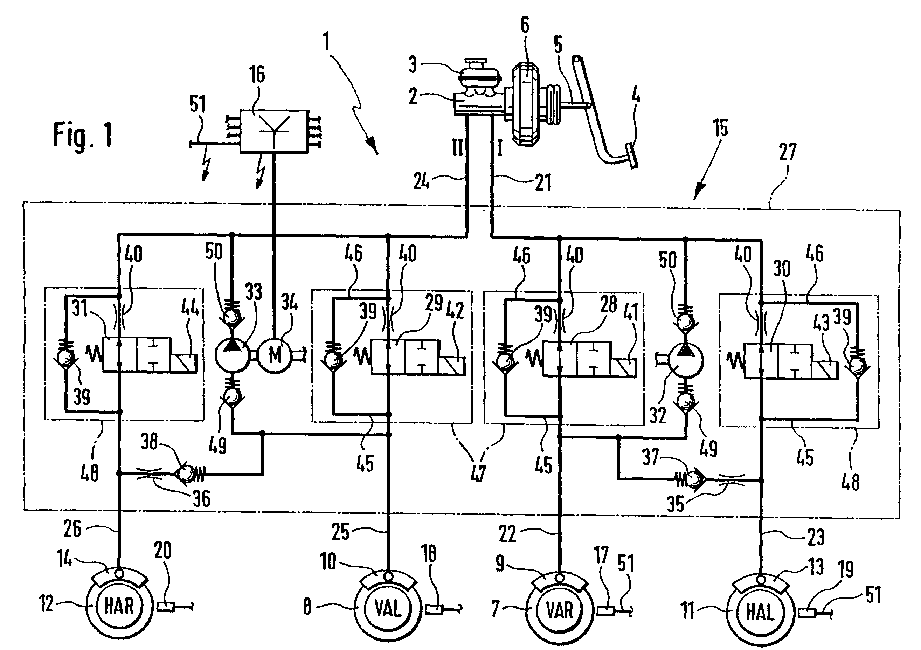

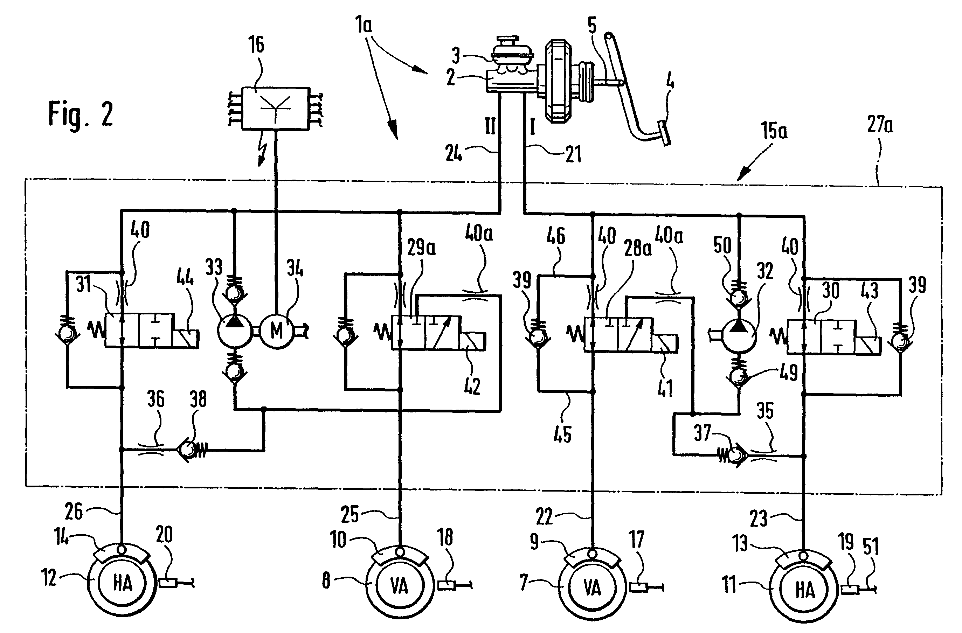

Durch die Druckschrift US-A-5 411 336 ist eine die Gattung bildende hydraulische Fahrzeugbremsanlage bekannt mit einem zweikreisigen Hauptbremszylinder, mit zwei Bremskreisen in Diagonal-Aufteilung für zwei Vorderradbremsen und zwei Hinterradbremsen und mit einer in die Bremskreise eingebauten Blockierschutzeinrichtung, die je Bremskreis eine Rückförderpumpe mit einem Eingang und einem Ausgang und ein erstes und ein zweites elektrisch steuerbares Ventil, die normal offen stehen, aufweist, wobei zwischen dem Hauptbremszylinder und der jeweiligen Vorderradbremse das erste Ventil angeordnet ist und wobei das zweite Ventil mit der jeweiligen Hinterradbremse verbunden ist und dabei zwischen der jeweiligen Hinterradbremse und dem Hauptbremszylinder angeordnet ist und wobei sowohl die Hinterradbremsen als auch die Vorderradbremsen über eine jeweilige Drossel mit den Eingängen der Rückförderpumpen verbunden sind. Wegen der elektrischen Steuerbarkeit der ersten und der zweiten Ventile und der Einschaltbarkeit eines für die beiden Rückförderpumpen gemeinsamen Antriebsmotors im Blockierschutzbetrieb ist ein Steuergerät notwendig, das in den Figuren 1 und 2 des Dokuments US-A-5 411 336 nicht dargestellt ist. Gemäß der Figur 2 des Dokuments können die ersten und zweiten Ventile durch Bypässe und durch in die Bypässe gelegte Rückschlagventile umgangen werden, wenn durch Loslassen eines Bremspedals Hauptbremszylinderdruck sinkt.

Durch das nachveröffentlichte Dokument WO-A-97/04999 (Figur 1) ist eine Fahrzeugbremsanlage bekannt, die innerhalb eines jeden gezeichneten Bremskreises, zu dem eine Vorderradbremse und eine Hinterradbremse gehören, ein erstes und ein zweites elektrisch steuerbares Ventil aufweist und in von Rücklaufleitungen, die von der Vorderradbremse und der Hinterradbremse ausgehen, jeweils eine Drossel aufweist, wobei beide Rücklaufleitungen zu einem Eingang einer Rückförderpumpe führen. Wenigstens in eine der Rücklaufleitungen ist ein zum Eingang der Rückförderpumpe hin öffenbares Rückschlagventil in Reihe zur Drossel angeordnet. Der auf die wenigstens eine Drossel gerichtete Anspruch 8 des Dokumentes läßt offen, ob beim Einbau nur eines einzigen Rückschlagventils in einen Bremskreis dieses Rückschlagventil der Vorderradbremse oder Hinterradbremse nachgeordnet ist. Steuerungstechnisch erwähnt dieses Dokument, dass unter anderem eine Druckerhöhung in der Hinterradbremse über das Druckniveau der Vorderradbremse möglich ist durch Auswahl der geeigneten Ventilschaltzeiten für das erste und das zweite Ventil.

Eine weitere, durch das Dokument JP-A 6 211 120 bekannte hydraulische Fahrzeugbremsanlage ist besonders zur Durchführung von Antriebsschlupfregelbetrieb weitergebildet und weist deshalb zusätzlich zu Lösungsmitteln, die Blockierschutzbetrieb ermöglichen, je Bremskreis eine besonders ausgebildete Pumpe auf derart, dass eine jede dieser Pumpen in zwei Richtungen fördern kann zu dem Zweck, dass im Blockierschutzbetrieb Druckmittel aus einer jeweiligen Vorderradbremse und einer jeweiligen Hinterradbremse wegpumpbar ist und zurückpumpbar ist in den Hauptbremszylinder und im Falle von Antriebsschlupfbegrenzung an einem angetriebenen Rad durch Bremsen mittels seiner Radbremse die Pumpe im Stande ist, aus dem normalerweise drucklosen Hauptbremszylinder Druckmittel zu entnehmen und entgegen der Bremsdruckabbaurichtung in die Radbremse des angetriebenen Rades zu drükken. Damit während eines solchen Bremsdruckaufbaus für die Radbremse des angetriebenen Antriebsrades Druck entstehen kann, ist ein Druckmittelabfluss hin zur Radbremse eines frei rollenden Rades zu verhindern mittels eines Rückschlagventils. Dadurch bleibt die hinter dem Rückschlagventil befindliche Radbremse des nicht angetriebenen Rades frei vom Zufluss von Druckmittel und demgemäß frei von Bremsdruck, der sonst in Folge von Strömungswiderstand durch das dieser Radbremse vorgeordnete elektrisch steuerbare Ventil entstehen könnte.

### Vorteile der Erfindung

Die erfindungsgemäße hydraulische Fahrzeugbremsanlage mit den kennzeichnenden Merkmalen des Anspruchs 1 hat den Vorteil, daß während einer normalen Bremsung beim Erreichen einer den Hinterrädern zugeordneten Schlupfgrenze durch Schließen der zweiten Ventile Bremsdruckanstiege in den Hinterradbremsen abzubrechen und dadurch dafür zu sorgen, daß beim Bremsen auf sehr griffiger Fahrbahn die Vorderräder vor den Hinterrädern zum Blockieren neigen. Dadurch kann ein Einbau von verzögerungsabhängig oder hinterachslastabhängig arbeitenden Hinterradbremsdruckregelventilen oder Hinterradbremsdruckbegrenzungsventilen vermieden werden.

Die Fahrzeugbremsanlage mit den kennzeichnenden Merkmalen des Anspruchs 2 hat den Vorteil, daß preisgünstige 2/2-Wegeventile verwendbar sind, wobei auf 2/2-Wegeventile aus dem Stand der Technik zurückgegriffen werden kann.

Die Fahrzeugbremsanlage mit den kennzeichnenden Merkmalen des Anspruchs 3 hat den Vorteil, daß preisgünstige 2/2-Wegeventile seitheriger Bauart und Baugröße verwendbar sind und daß ein zur Bestimmung von Bremsdruckaufbaugeschwindigkeiten in wenigstens einer der Radbremsen notwendiger Strömungswiderstand mittels der anspruchsgemäßen Drossel verwirklicht wird.

Die Fahrzeugbremsanlage mit den kennzeichnenden Merkmalen des Anspruchs 4 hat den Vorteil, daß Bremsdruckänderungsgeschwindigkeiten mittels eines Elektromagnets des zwischen dem Hauptbremszylinder und der jeweiligen Radbremse befindlichen Ventils einstellbar sind und gegebenenfalls während eines Blockierschutzbetriebs veränderbar sind. Hierfür wird der Erregungsstrom des Elektromagnets eingestellt oder geregelt.

Die hydraulische Fahrzeugbremsanlage mit den kennzeichnenden Merkmalen des Anspruchs 5 hat den Vorteil, daß während eines Erhöhens des Bremsdrucks in einer Vorderradbremse innerhalb der dem gleichen Bremskreis zugeordneten Hinterradbremse zur schnellen Hinterradbremsdruckabsenkung die Leistung der Rückförderpumpe vollständig zur Verfügung steht.

Die hydraulische Fahrzeugbremsanlage mit den kennzeichnenden Merkmalen des Anspruch 6 hat den Vorteil, daß mittels nur eines Elektromagnets je Radbremse, beispielsweise je Vorderradbremse, Bremsdruckänderungsgeschwindigkeiten durch variable Erregung des Elektromagnets einstellbar sind. Beispielsweise kann auch durch Einstellung des Erregerstroms eine Größe einer Druckdifferenz zwischen der betreffenden Radbremse und dem Hauptbremszylinder eingestellt werden, auch wenn die Förderleistung der Rückförderpumpe variieren sollte beispielsweise als Folge variierender Druckunterschiede zwischen dem Hauptbremszylinder und wenigstens einer der Radbremsen oder in Folge von unterschiedlichen Versorgungsspannungen eines elektrischen Antriebsmotors der Rückförderpumpen.

Die hydraulische Fahrzeugbremsanlage mit den kennzeichnenden Merkmalen des Anspruchs 7 ermöglicht es, insbesondere bei Verwendung von Stetigventilen oder Differenzdruckventilen, nach einer ersten großen Bremsdruckabsenkung mittels großer Förderleistung der Rückförderpumpen dann, wenn im weiteren Verlauf des Blockierschutzbetriebs nur noch geringe Bremsdruckänderungen notwendig sind, die Förderleistung dieser Rückförderpumpen kleiner einzustellen. Dies hat den Vorteil von weniger Energieverbauch und weniger Geräuscherzeugung. Diese Möglichkeit ist nützlich, wenn ein auf einem griffigen Fahrbahnabschnitt stark gebremstes Fahrzeug auf einen vereisten Fahrbahnabschnitt gerät.

Die hydraulische Fahrzeugbremsanlage mit den kennzeichnenden Merkmalen des Anspruchs 8 hat den Vorteil, daß in preisgünstiger Weise in Verbindung mit den Merkmalen des Anspruchs 1 je Bremskreis ein mit einem Rückschlagventil ausgestatteter Bypass zum schnellen Bremsdruckabsenken in der Vorderradbremse und der Hinterradbremse ausreicht beim Loslassen des Bremspedals.

Die Weiterbildung mit den kennzeichnenden Merkmalen des Anspruchs 9 ergibt den Vorteil, daß unter Weiterbenutzung der Rückförderpumpen, die dem Schutz vor Radblockieren beim Bremsen per Betätigung des Bremspedals dienen, zusätzlich Antriebsschlupfregelung durch Kompensieren von überschüssigem Antriebsdrehmoment an antreibbaren Vorderrädern möglich ist per automatisches Bremsen.

Die kennzeichnenden Merkmale der Ansprüche 10 und 11 geben hierfür unterschiedliche konstruktive Lösungsmerkmale an, die allerdings nicht die einzigen sind, die im Zusammenhang von Blockierschutzeinrichtungen des sogenannten Rückfördertyps mit der Weiterbildung für den Antriebsschlupfregelungsbetrieb möglich sind. Die kennzeichnenden Merkmale des Anspruchs 12 geben ein konkretes Lösungsbeispiel an, das aus der Druckschrift WO 94/08831 entnehmbar ist.

Die kennzeichnenden Merkmale des Anspruchs 13 schließlich bewirken, daß dann, wenn die zweiten Ventile geschlossen sind, Hinterradbremsdruck absenkbar ist auf Vorderradbremsdruck anläßlich des Absenkens von Bremsdruck beispielsweise durch Loslassen des Bremspedals.

### Zeichnung

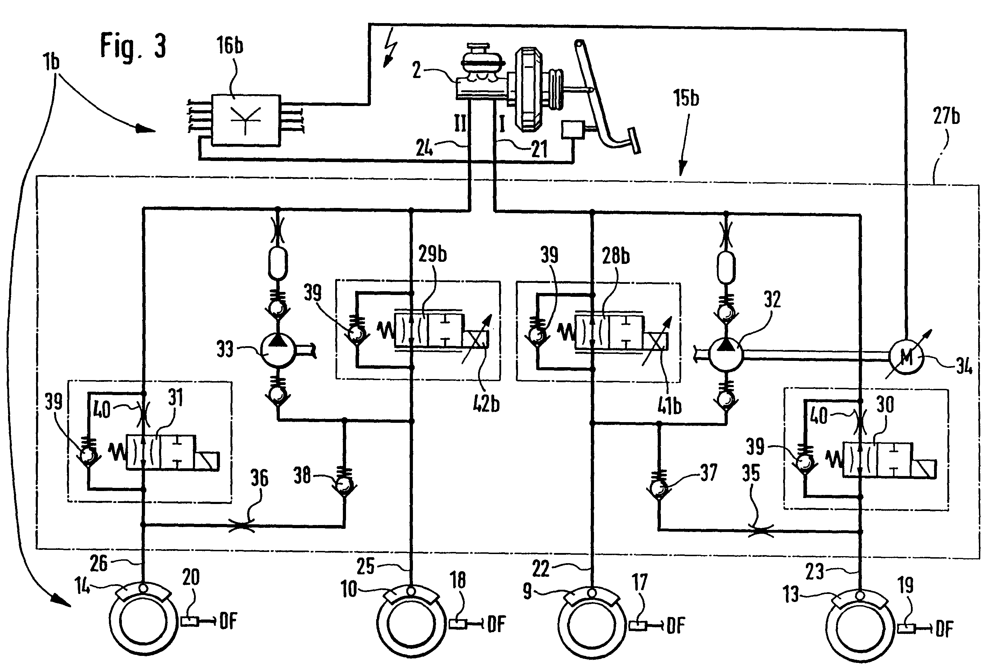

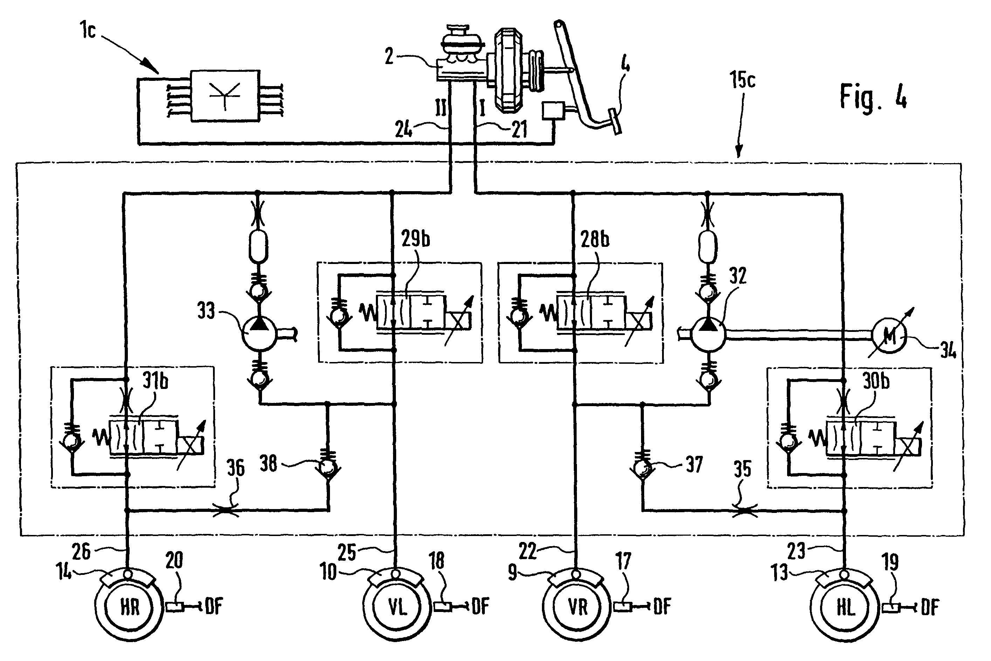

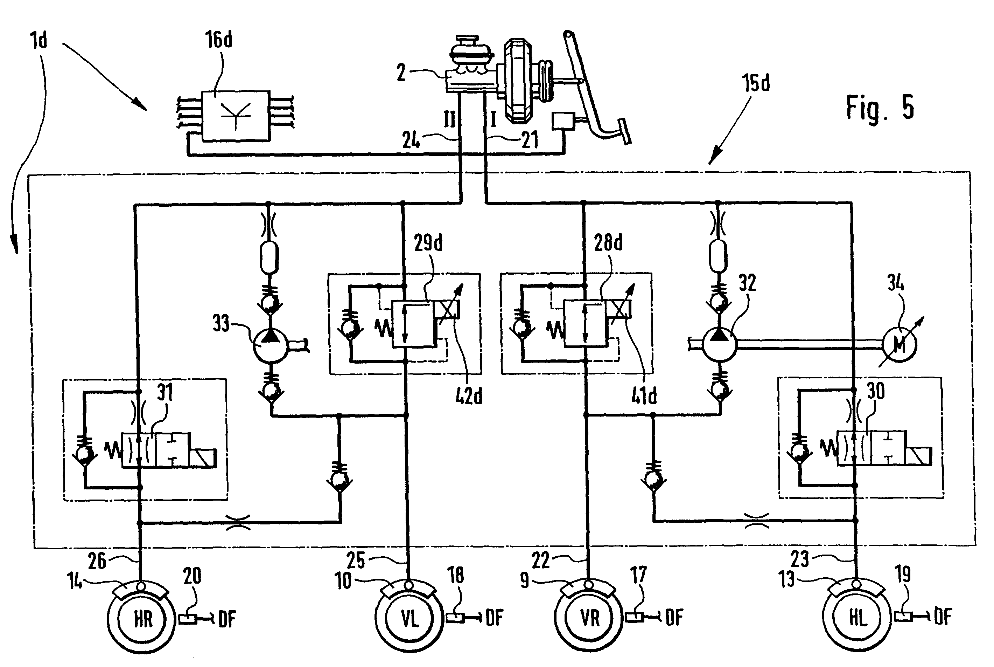

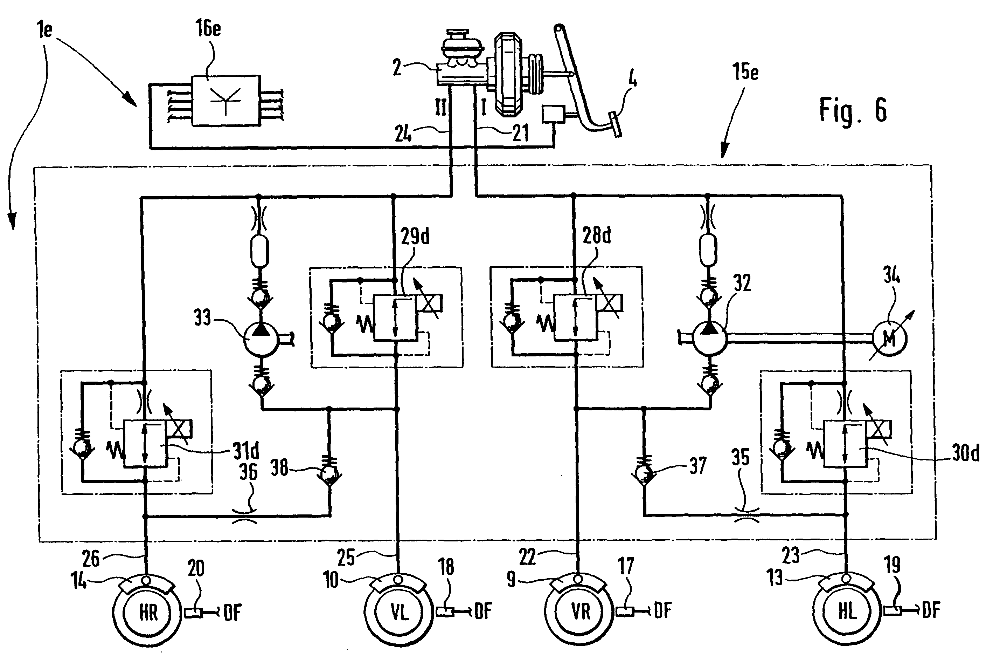

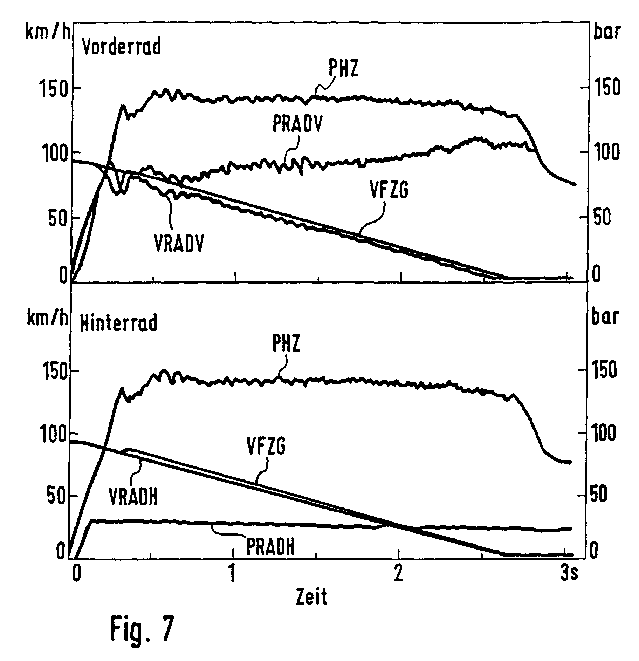

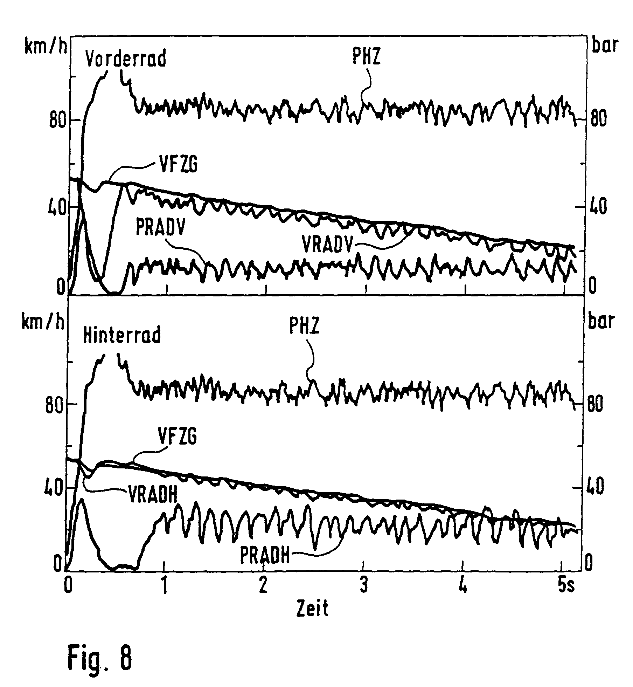

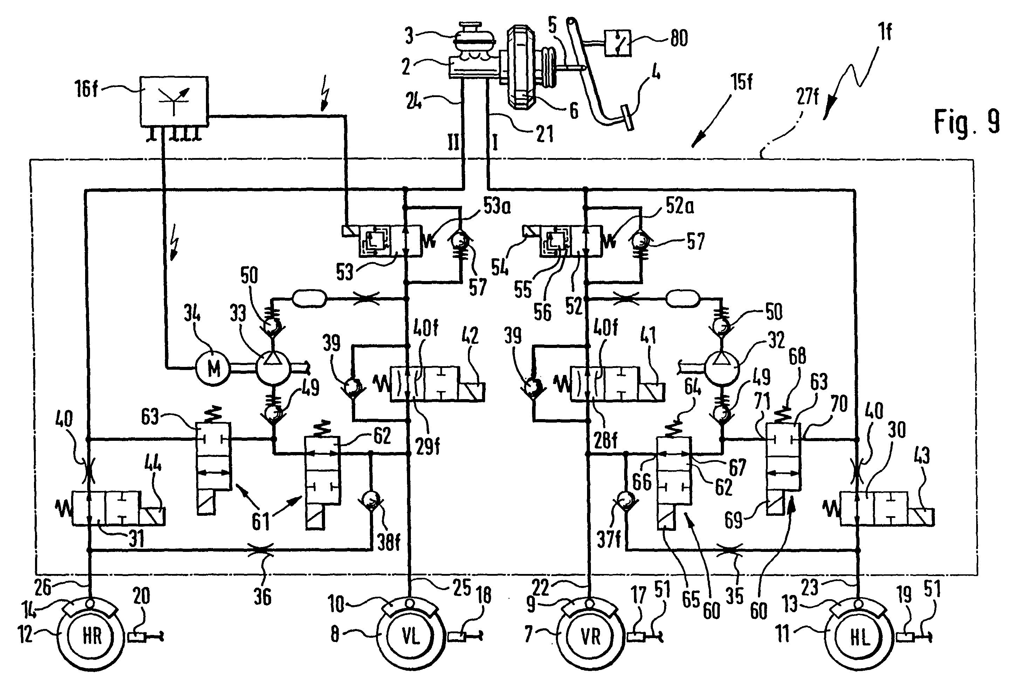

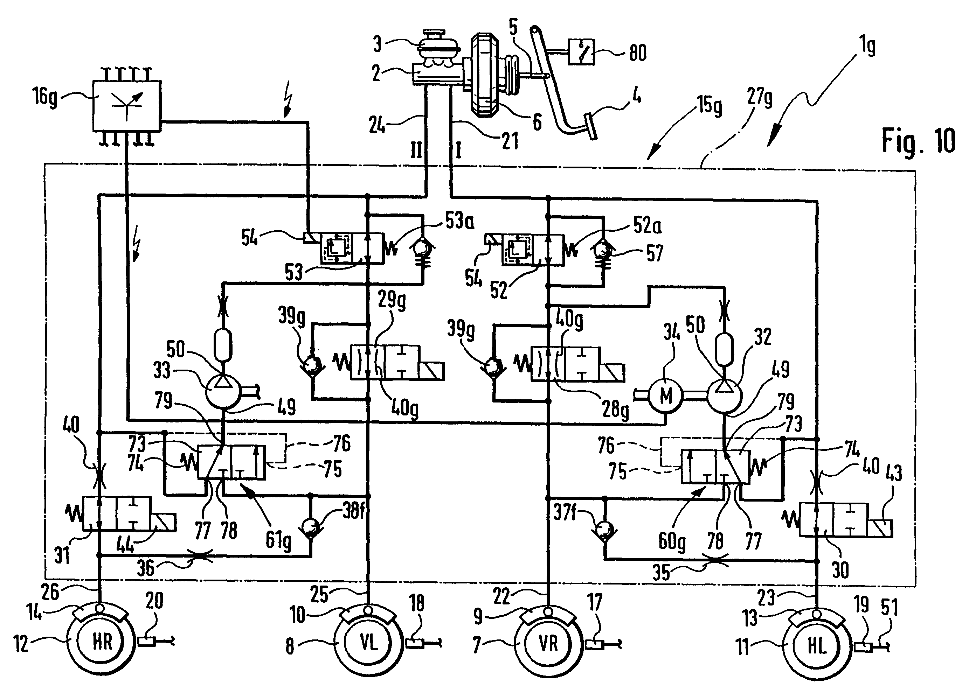

Acht Ausführungsbeispiele der erfindungsgemäßen Fahrzeugbremsanlage sind in der Zeichnung dargestellt und nachfolgend näher beschrieben. Es zeigen Figur 1 einen ersten Schaltplan der Fahrzeugbremsanlage mit ersten und zweiten Ventilen in Form von 2/2-Wegeventilen, Figur 2 einen zweiten Schaltplan der Fahrzeugbremsanlage mit ersten Ventilen in Form von 3/2-Wegeventilen, Figur 3 einen weiteren Schaltplan der Fahrzeugbremsanlage mit ersten Ventilen in Form von Stetig-Wegeventilen, Figur 4 einen weiteren Schaltplan der Fahrzeugbremsanlage mit ersten und zweiten Ventilen in Form von Stetig-Wegeventilen, Figur 5 einen weiteren Schaltplan der Fahrzeugbremsanlage mit ersten Ventilen in Form von elektrisch steuerbaren Differenzdruckventilen, Figur 6 einen weiteren Schaltplan der Fahrzeugbremsanlage mit ersten und zweiten Ventilen in Form von Differenzdruckventilen, Figur 7 eine Abbildung eines Meßschriebes eines Blockierschutzbetriebes über trockenem Asphalt, Figur 8 eine Abbildung eines Meßschriebes eines Blockierschutzbetriebs über einer vereisten Fahrbahn, Figur 9 eine erste Weiterbildung der Fahrzeugbremsanlage der Figur 1 zur Regelung von Antriebsschlupf an antreibbaren Vorderrädern und Figur 10 eine zweite Weiterbildung ebenfalls zur Antriebsschlupfregelung.

### Beschreibung der Ausführungsbeispiele

Die hydraulische Fahrzeugbremsanlage 1 gemäß dem Schaltplan der Figur 1 hat einen zweikreisigen Hauptbremszylinder 2 mit einem Vorratsbehälter 3, ein Bremspedal 4, eine Pedalstange 5, einen Bremskraftverstärker 6, zwei Bremskreise I und II, zwei Vorderradbremsen 7, 8 mit Radbremszylindern 9, 10, zwei Hinterradbremsen 11, 12 mit Radbremszylindern 13, 14, eine Blockierschutzeinrichtung 15 und zu der Blockierschutzeinrichtung 15 gehörend ein Steuergerät 16 sowie Raddrehungssensoren 17, 18, 19 und 20.

Zum Bremskreis I gehört eine von dem Hauptbremszylinder 2 ausgehende Hauptbremsleitung 21, die zur Blockierschutzeinrichtung 15 führt, sowie Radbremsleitungen 22 und 23, die von der Blockierschutzeinrichtung 15 ausgehen und an den Radbremszylindern 9 und 13 enden. In gleichartiger Weise gehören zu dem Bremskreis II eine Hauptbremsleitung 24 und zwei Radbremsleitungen 25 und 26, wobei die Radbremsleitung 25 zum Radbremszylinder 10 und die Radbremsleitung 26 zum Radbremszylinder 14 führt.

Die Blockierschutzeinrichtung 15 weist einen Ventilaufnahmeblock 27 auf, in den erste Ventile 28 und 29 und zweite Ventile 30 und 31, zwei Rückförderpumpen 32, 33, die einen gemeinsamen Antriebsmotor 34 aufweisen, zwei Drosseln 35, 36 und in Reihe zu diesen zwei Rückschlagventile 37 und 38 eingebaut sind. Wahlweise können noch eingebaut sein weitere Rückschlagventile 39 sowie weitere Drosseln 40.

Die ersten Ventile 28 und 29 sind als mittels Elektromagneten 41 und 42 steuerbare 2/2-Wegeventile ausgebildet und bei stromlosen Elektromagneten 41 und 42 geöffnet. Die zweiten Ventile 30 und 31 sind mittels weiteren Elektromagneten 43 und 44 steuerbar und ebenfalls als 2/2-Wegeventile ausgebildet, die bei stromlosen Elektromagneten 44 beziehungsweise 45 offen sind. Dabei sind die ersten Ventile 28, 29 in den beiden Bremskreisen I und II eingebaut zwischen die vom Hauptbremszylinder 2 ausgehenden Hauptbremsleitungen 21 bzw. 24 und die zu den Radbremszylindern 9 bzw. 10 führenden Radbremsleitungen 22 bzw. 23. Die Rückschlagventile 39 bilden in Verbindung mit Bypassleitungen 45 und 46 Bypässe um die ersten Ventile 28 und 29, wobei die Rückschlagventile 39 zu den Hauptbremsleitungen 21 und 24 und somit zum Hauptbremszylinder 2 öffenbar sind. Dabei können die Rückschlagventile 39 beispielsweise in Form der bekannten Manschettenrückschlagventile ausgebildet und mit den Ventilen 28 und 29 zu Baueinheiten 47 kombiniert sein, so wie dies symbolisch durch strichpunktierte Umrandungen dargestellt ist. Beispielsweise können auch bekannte federlose Kugelrückschlagventile oder dergleichen eingebaut sein. Die weiteren Drosseln 40 sind mit den ersten Ventilen 28 und 29 in Reihe geschaltet und ebenfalls in die Baueinheit 47 einbezogen.

Die zweiten Ventile 30 und 31 sind zwischen die Hauptbremsleitungen 21 bzw. 24 und die Hauptbremsleitungen 25 bzw. 26 und also zwischen den Hauptbremszylinder 2 und die Radbremszylinder 13 bzw. 14 eingebaut. Wahlweise sind wieder die Rückschlagventile 39 mit Bypassleitungen 45 und 46 als um die zweiten Ventile 30 bzw. 31 führende und zum Hauptbremszylinder 2 hin öffenbare Bypässe angeordnet. Mit den zweiten Ventilen 30 bzw. 31 sind wiederum je eine Drossel 40 in Reihe geschaltet. Wiederum können die zweiten Ventile 30, 31 und die weiteren Rückschlagventile 39 und die weiteren Drosseln 40 zu Baueinheiten 48 zusammengefaßt sein.

Die Rückförderpumpen 32, 33 haben Eingänge 49 in Form von Eingangsrückschlagventilen bzw. Ausgänge 50 in Form von Ausgangsrückschlagventilen. Die Ausgangsrückschlagventile 50 sind mit den Hauptbremsleitungen 21 bzw. 24 verbunden. Die Eingangsrückschlagventile 49 sind hydraulisch permanent mit den Radbremsleitungen 22 bzw. 25 und somit den Radbremszylindern 9 und 10 verbunden. Dabei sind, wie bereits erwähnt, die Radbremszylinder 9 und 10 Vorderradbremsen 7 und 8 zugeordnet, die zu den Bremskreisen I und II gehören. Demgemäß liegen die Bremskreise I und II in Diagonal-Aufteilung vor.

Im Unterschied zu den Radbremszylindern 9 bzw. 10 der Vorderradbremse 7 bzw. 8 sind die Radbremszylinder 13 bzw. 14 der Hinterradbremsen 11 bzw. 12 unter Zwischenschaltung der Drosseln 35 bzw. 36 und der zu diesen in Reihe geschalteten Rückschlagventile 37 bzw. 38 mit den Einlaßrückschlagventilen 49 der Rückförderpumpen 32 bzw. 33 verbunden. Dadurch sind bei Weglassung der Bypässe um die zweiten Ventile 30, 31 die hinteren Radbremszylinder 13, 14 durch die Bypässe der ersten Ventile 28, 29 in preisgünstiger Weise von Bremsdrücken schnell entlastbar am Ende einer Bremsung per Loslassen des Bremspedals 4. Bei Weglassung der Rückschlagventile 37, 38 könnten die beiden Bypässe um die beiden zweiten Ventile 30, 31 gelegt werden.

Die Raddrehungssensoren 17 bis 20 sind beispielsweise in der bekannten Weise ausgebildet, daß sie je einer Umdrehung eines ihnen zugeordneten Rades eine Anzahl von Impulsen abgeben, die durch unterbrochen dargestellte Leitungen 51 dem Steuergerät 16 zugeleitet werden. Das Steuergerät 16 ist in an sich bekannterweise derart eingerichtet, daß es aus Zeitabständen zwischen aus den Raddrehungssensoren 17, 18, 19 bzw. 22 kommenden Impulsen erkennen kann, ob eine Radblockiergefahr, also ein unzulässig oder nachteilig großer Schlupf, vorhanden ist. In Abhängigkeit von dem Erkennen einer Radblockiergefahr an wenigstens einem der nicht dargestellten Räder bewirkt das Steuergerät 16 ein Einschalten des Antriebsmotors 34 und dadurch ein Inbetriebsetzen der Rückförderpumpen 32 und 33. Des weiteren steuert das Steuergerät 16 wenigstens dasjenige der ersten Ventile 28, 29 bzw. zweiten Ventile 30, 31 in die Schließstellung, an dessen zugeordnetem Rad die Radblockiergefahr besteht.

Besteht beispielsweise die Radblockiergefahr an einem Vorderrad, das der Radbremse 7 und also dem Radbremszylinder 9 zugeordnet ist, so wird das erste Ventil 28 geschlossen mit der Folge, daß die in Betrieb befindliche Rückförderpumpe 32 Druckmittel aus dem Radbremszylinder 9 zurückfördert zum Hauptbremszylinder 2. Infolgedessen sinkt innerhalb dem Radbremszylinder 9 der Bremsdruck, die Bremswirkung läßt nach und die Blockiergefahr wird vermindert. Ist die Radblockiergefahr ausreichend vermindert, dann wird das erste Ventil 28 beispielsweise geöffnet, so daß es wieder seine Ausgangsstellung einnimmt, mit der Folge, daß durch die Drossel 40 hindurch ein infolge der vorangegangenen Bremsdruckabsenkung vorhandener Druckunterschied zwischen dem Hauptbremszylinder 2 und dem Radbremszylinder 9 kleiner wird. Dabei dient die Drossel 40 dazu, einen solchen Druckunterschied verlangsamt zu vermindern, damit einerseits eine durch das Öffnen des ersten Ventils 28 bedingte Geräuschentwicklung möglichst gering ist und andererseits Bremskraftveränderungen nicht abrupt erfolgen, was gegebenenfalls zu neuer Überbremsung des betreffenden Rades führen könnte. Eine zweite Möglichkeit besteht darin, den Querschnitt der Drossel 40 größer zu wählen als für die beschriebene Betriebsweise und dafür während einer Bremsdruckerhöhung in dem Radbremszylinder 9 das erste Ventil 28 in einer in der US-PS 3,637,264 beschriebenen Weise periodisch zu öffnen und zu schließen, so daß ein Bremsdruckanstieg stufenartig erfolgt.

Tritt die Radblockiergefahr beispielsweise an einem Hinterrad auf, das der Hinterradbremse 11 zugeordnet ist, so wird das zweite Ventil 30 geschlossen. Infolgedessen wird die eingeschaltete Rückförderpumpe 32 Druckmittel aus dem Radbremszylinder 13, das auf dem Weg zum Einlaßrückschlagventil 49 die Drossel 35 und das Rückschlagventil 37 durchströmt, durch das Auslaßrückschlagventil 50 und die Hauptbremsleitung 21 zum Hauptbremszylinder 2 zurückfördern. Infolgedessen sinkt im Radbremszylinder 13 der Bremsdruck, so daß eine an dem Hinterrad aufgetretene Radblockiergefahr vermindert oder beseitigt wird. Ist die Radblockiergefahr beseitigt, so kann beispielsweise in einer für das erste Ventil 28 beschriebenen Weise auch das zweite Ventil 30 in seine Öffnungsstellung gesteuert werden.

Erkennbar ist, daß innerhalb dem Bremskreis I die Vorderradbremse 7 und die Hinterradbremse 11 jeweils ein eigenes Ventil 28 bzw. 30 hat, so daß Druckmittelzufuhr aus dem Hauptbremszylinder 2 zu den Radbremszylindern 9 bzw. 13 in Abhängigkeit von Radblockiergefahr individuell steuerbar ist.

Weil also der Hinterradbremse 11 ein eigenes Ventil 30 zum Unterbrechen von Druckmittelzufluß zugeordnet ist, und weil dem Hinterrad der Raddrehungssensor 19 zugeordnet ist, und weil das Steuergerät 16 in der Lage ist, größer werdenden Radschlupf und eine beginnende Radblockiergefahr zu erkennen, also das Auftreten von Bremsschlupf und dessen Größe zu erkennen, wird zusätzlich zur Verwendung im Blockierschutzbetrieb das zweite Ventil 30 auch dazu eingesetzt, im normalen Bremsbetrieb, wenn das Bremspedal 4 zunehmend stärker betätigt wird, das zweite Ventil 30 bereits zu schließen, wenn eine in dem Steuergerät 16 gespeicherte vorgewählte Bremsschlupfgrößenschwelle erreicht wird. Dies ergibt die Möglichkeit, Hinterradbremsen an sich sehr wirksam zu gestalten und trotzdem zu erreichen, daß auf sehr griffiger Fahrbahn bis zu einer gesetzlich vorgeschriebenen Verzögerung Vorderräder vor Hinterrädern blockieren und dadurch ein dieserart ausgerüstetes Fahrzeug beherrschbar bleibt. Ab dem Schließen des zweiten Ventils 30 und sinngemäß im anderen Bremskreis II des zweiten Ventils 31 können also, weil die ersten Ventile 28 und 29 geöffnet sind, Bremdrücke in den Radbremszylindern 9 und 10 der Vorderradbremsen 7 und 8 noch vom Fahrer willkürlich gesteigert werden. Beispielsweise, was je nach Fahrzeugtyp und Beladung verschieden sein kann, wird mittels der zweiten Ventile 30, 31 bei der für das Steuergerät 16 vorgegebenen Schlupfgrößenschwelle ein Bremsdruckanstieg in den Radbremszylindern 13 und 14 begrenzt auf etwa 25 bar.

### Wirkungsweisen der Blockierschutzeinrichtung

Anhand der Abbildung eines Meßschriebes gemäß der Figur 7, der für beide Bremskreise I und II gilt, wird die Wirkungsweise beschrieben bei einem Bremsvorgang auf trockenem Asphalt. In der Figur 7 ist sowohl in der unteren Hälfte als auch in der oberen Hälfte beginnend beim Zeitpunkt 0 ein Anstieg des Druckes PHZ zu erkennen, wobei PHZ der Druck im Hauptbremszylinder 2 ist, hervorgerufen durch Betätigung des Bremspedals 4. Beispielsweise durch die den zweiten Ventilen 30 und 31 vorgeordneten Drosseln 40 erfolgt für Hinterräder in den Radbremszylindern 13 und 14 ein kurzfristig verzögerter Bremsdruckanstieg PRADH, der entsprechend der vorbeschriebenen Ausbildung des Steuergerätes 16 auf den vorher erwähnten Wert von ca. 25 bar begrenzt ist. Demgemäß verläuft eine PRADH zugeordnete Linie in der Figur 7 im wesentlichen parallel zur Zeitbezugslinie. In der oberen Hälfte der Figur 7 erfolgt ein Druckanstieg PRADV in den Radbremszylindern 9 und 10 der Vorderräder zunächst nur wenig verzögert relativ zum Druck PHZ im Hauptbremszylinder.

Die Bremsdrücke in den Radbremszylindern 13 und 14 und in den Radbremszylindern 9 und 10 haben eine Fahrzeugverzögerung zur Folge, die sowohl in der unteren Hälfte als auch der oberen Hälfte der Figur 7 durch Abnahme einer Fahrzeuggeschwindigkeit VFZG per geneigter Geraden dargestellt ist. Ausgehend von einer Fahrzeuggeschwindigkeit von etwa 90 km/h wird diese Fahrzeuggeschwindigkeit nach etwa 2,7 Sekunden zum Stillstand des Fahrzeugs führen.

Nun zurück zu der oberen Hälfte der Figur 7 und dem Bremsdruckverlauf PRAV, beginnend beim Druck 0 bar. Wie bereits erwähnt, steigt der Druck PRADV in den Radbremszylindern 9 und 10 zunächst etwas verzögert und dann steiler als der Druck PHZ im Hauptbremszylinder 2, wobei, wie dies von einer girlandenartig unterhalb der geneigten Linie VFZG verlaufenden weiteren Linie VRADV dargestellt ist, sich zwischen den beiden Linien VFZG und VRAV ein Abstand bildet, der zunächst anwächst. Der Abstand gibt den Schlupf des Vorderrades relativ zur Fahrbahn an. Entlang dem größer werdenden Abstand wächst der Schlupf des Vorderrades an. Wie bereits erwähnt, erkennt das Steuergerät 16, daß für das Vorderrad bzw. beide Vorderräder Radblockiergefahr entstanden ist, und schaltet den Antriebsmotor 34 der Rückförderpumpen ein und schließt die ersten Ventile 28 und 29. Infolgedessen sinkt, wie dies an der Linie PRADV erkennbar ist, der Bremsdruck in den Radbremszylindern 9 und 10 mit der Folge der Verringerung von Bremskräften und der Verminderung von Vorderradschlupf, wodurch sich die Linie VRADV nach oben der Linie VFZG nähert. Weil die ersten Ventile 28 und 29 im Prinzip Zweistellungsventile sind und der Beseitigung einer Radblockiergefahr durch vorübergehendes Bremsdruckabsenken eine neue Radblockiergefahr folgen kann, ergibt sich durch wiederholtes Bremsdruckabsenken und Bremsdruckerhöhen der wellenartige Verlauf PRADV in den Radbremszylindern 9 und 10 der Vorderradbremsen 7 und 8. Weil also Bremsdruckerhöhungen und Bremsdrucksenkungen einander abwechseln, wird natürlich auch der Bremsschlupf variieren, was an der ebenfalls gewellt verlaufenden Linie VRADV in der oberen Hälfte der Figur 7 erkennbar ist.

Weil also den Vorderradbremszylindern 9 und 10 abwechselnd Druckmittelmengen entnommen und mittels der Rückförderpumpe 32 bzw. 33 zurück zum Hauptbremszylinder 2 gefördert werden, von wo aus die Druckmittelnmengen wieder zu den Radbremszylindern 9, 10 durch Öffnen der ersten Ventile 28 bzw. 29 zurückleitbar sind, entstehen natürlich auch Druckschwankungen im Hauptbremszylinder, was an der gewellt verlaufenden Linie PHZ erkennbar ist.

Wie aus der unteren Hälfte der Figur 7 am Verlauf der Linie PRADH gefolgert werden kann, war für die Hinterräder des Fahrzeugs kein Blockierschutzbetrieb notwendig.

Blockierschutzbetrieb über einer vereisten Fahrbahn ist der Abbildung des Meßschriebes gemäß der Figur 8 entnehmbar. Im Unterschied zur Figur 7 sind in der Figur 8 eine geringere Ausgangsgeschwindigkeit und eine andere Skalierung von Drücken dargestellt. Geht man davon aus, daß ein Fahrer das Bremspedal 4 zügig betätigt, so steigt der Druck PHZ, also der Druck im Hauptbremszylinder 2, zügig an. Etwas verzögert steigen auch die Drücke PRADH in beiden Radbremszylindern 13, 14 steil an, so daß in den Hinterradbremszylindern 13 bzw. 14 der Druck PRADH vor dem Schließen der zweiten Ventile 30 bzw. 31 so hoch ansteigt, daß Hinterräder zu blockieren beginnen. Dies ist aus der steil abwärts gerichteten Teillinie VRADH gegenüber der Fahrzeuggeschwindigkeit VFZG erkennbar. Das Schließen der zweiten Ventile 30 bzw. 31 bei gleichzeitigem Einschalten der Rückförderpumpen 32 bzw. 33 bewirkt einen steilen und tiefen Bremsdruckabfall in den Radbremszylindern 13 bzw. 14 entsprechend dem Verlauf der dem Hinterrad zugeordneten Kurve PRADH. Gleichzeitig entstand auch eine sehr ausgeprägte Radblockiergefahr für die Vorderräder, was in der oberen Hälfte der Figur 8 erkennbar ist an einem noch deutlicheren tieferen Abfall der Radumfangsgeschwindigkeit VFZG. Etwa 0,25 Sekunden nach Bremsbeginn ist die niedrigste Radumfangsgeschwindigkeit der Vorderräder erreicht durch Schließen der ersten Ventile 30 bzw. 31 bei laufenden Rückförderpumpen 32 bzw. 33 und der daraus folgenden tiefen Bremsdruckabsenkung. Danach nähert sich die Vorderradumfangsgeschwindigkeit VRADV der Fahrzeuggeschwindigkeit VFZG, wodurch der Bremsschlupf offensichtlich einen Moment lang verschwindet und dabei die Radblockiergefahr beseitigt wird. Die Beseitigung dieser Radblockiergefahr läßt einen Bremsdruckanstieg in den Radbremszylindern 9 und 10 der Vorderradbremsen 7 und 8 zu, was in der oberen Hälfte der Figur 8 erkennbar ist. Der erste Bremsdruckanstieg nach der tiefen Senke löst dann allerdings erneut eine Radblockiergefahr aus, was an dem geneigten Teil der Linie VRADV unmittelbar nach dem Verschwinden von Bremsschlupf erkennbar ist. Danach pendelt durch wiederholtes Schließen und Öffnen der ersten Ventile 30 bzw. 31 der Bremsdruck in den Radbremszylinder 9 bzw. 10 der Vorderradbremse 7 bzw. 8 um einen in der Größenordnung von 10 bar liegenden Mittelwert. Demgegenüber pendelt der Bremsdruck in den Radbremszylindern 13 bzw. 14 der Hinterradbremsen 11 bzw. 12 um einen mittleren Wert von ca. 20 bar. Erkennbar ist also, daß der mittlere Hinterradbremsdruck deutlich höher ist als der mittlere Vorderradbremsdruck während eines Blockierschutzbetriebs über vereister Fahrbahn, wogegen im Bremsbetrieb ohne Radblockiergefahr der Hinterradbremsdruck nicht höher als der Vorderradbremsdruck ist. Erkennbar wird also der in der Beschreibungseinleitung genannte Wunsch erfüllt, den Hinterradbremsdruck höher als den Vorderradbremsdruck einstellen zu können, damit Hinterradbremsen gegebenenfalls einen erhöhten Beitrag zur Fahrzeugverzögerung liefern können.

Eine höckerartig verlaufende Überhöhung des Druckes PHZ im Hauptbremszylinder 2 ab dem Auftreten von Radblockiergefahr sowohl an Vorderrädern als auch Hinterrädern kann man sich so erklären, daß der Fahrer das Bremspedal 4 mit einer bestimmten Geschwindigkeit betätigt hat und durch das Schließen der ersten Ventile und der zweiten Ventile 28, 29, 30 und 31 plötzlich auf einen erhöhten Widerstand trifft, was zur vorübergehenden Drucküberhöhung im Hauptbremszylinder führt. Die Drucküberhöhung wird dadurch unterstützt, daß die Rückförderpumpen 32 und 33 Druckmittel aus den Radbremszylindern 9, 10, 13 und 14 in beachtlichem Ausmaß in den Hauptbremszylinder 2 zurück drücken.

Die erfindungsgemäße Fahrzeugbremsanlage 1a gemäß der Figur 2 unterscheidet sich von der Fahrzeugbremsanlage 1 gemäß der Figur 1 dadurch, daß erste Ventile 28a und 29a, die je zwischen den Hauptbremsleitungen 21 bzw. 24 und den Radbremsleitungen 22 bzw. 23, 25 angeordnet sind, als mittels Elektromagneten 41 bzw. 42 steuerbare 3/2-Wegeventile ausgebildet sind. Dabei sind diese zweiten Ventile 28a und 29a so ausgebildet, daß sie bei stromlosen Elektromagneten 41 bzw. 42 durchlässige Verbindungen bereitstellen zwischen den Hauptbremsleitungen 21 bzw. 24 und den Radbremsleitungen 22 bzw. 25. Werden die Elektromagnete 41 bzw. 42 mit Erregerstrom beaufschlagt, so trennen die Ventile 28a und 29a die Radbremszylinder 9 und 10 vom Hauptbremszylinder 2 und verbinden die Radbremszylinder 9 und 10 mit dem jeweiligen Eingangsrückschlagventil 49 der jeweiligen Rückförderpumpe 32 bzw. 33. Durch Einbau von weiteren Drosseln 40a zwischen die 3/2-Wegeventile 28a und 29a und die jeweilige Rückförderpumpe 32 bzw. 33 sind Bremsdruckabsenkgeschwindigkeiten in den Radbremszylindern 9 und 10 beeinflußbar. Im Falle, daß die 3/2-Wegeventile 28a bzw. 29a sich in den dargestellten Grundstellungen befinden und Radblockiergefahr an Hinterrädern bestehen sollte, werden Bremsdrücke in den Radbremszylindern 13 bzw. 14 durch Schließen der zweiten Ventile 30 bzw. 31 abgesenkt ohne Verminderung der Bremsdrücke in den Radbremszylindern 9 bzw. 10 der Vorderradbremsen 7 bzw. 8.

Wie im Ausführungsbeispiel gemäß der Figur 1 kann man, ohne daß dies in der Figur 2 dargestellt ist, die ersten Ventile und die zweiten Ventile jeweils mit den Rückschlagventilen 39 und den Drosseln 40 wieder zu Baueinheiten zusammenfassen und in einen Ventilaufnahmeblock 27a einstecken. Wegen der nunmehr als 3/2-Ventile ausgebildeten ersten Ventile 28a und 29a und der dafür erforderlichen geänderten Kanalführung 40 unterscheidet sich der Ventilaufnahmeblock 27a von dem Ventilaufnahmeblock 27 der Figur 1.

Die in der Figur 3 dargestellte erfindungsgemäße Fahrzeugbremsanlage 1b unterscheidet sich von derjenigen Fahrzeugbremsanlage 1 gemäß der Figur 1 dadurch, daß erste Ventile 28b und 29b zu Stetig-Ventilen weitergebildet sind, was gemäß ISO-Norm durch parallele Striche neben den Quadraten des Ventilsymbols und durch Pfeile für Variabilität an zugeordneten Elektromagneten 41b und 42b symbolisiert ist. Die ersten Ventile 28b und 29b sind deshalb verwendbar als drosselnde Wegeventile mit dem Vorteil, daß durch stetiges Schließen mittels ansteigender Stromstärke, die auf die Elektromagnete 41b bzw. 42b wirkt, die ersten Ventile 28b und 29b zunächst drosselnd und dann schließend wirken. Umgekehrt kann man durch allmähliche Verringerung der zum Schließen der ersten Ventile 28b, 29b dienenden Stromstärken auch ein allmähliches Öffnen bei weniger werdender Drosselung erreichen. Dies ergibt den im Zusammenhang mit Stetig-Wegeventilen bekannten Vorteil, daß sich in den Hauptbremsleitungen 21 und 24 und den Radzylinderleitungen 22 und 25 befindende Flüssigkeitssäulen im wesentlichen ruckfrei und dadurch geräuscharm beschleunigen und verzögern lassen. Durch Variieren der Erregung der Elektromagnete 41b und 42b kann man auch während eines Blockierschutzregelbetriebs die Bremsdruckänderungsgeschwindigkeiten auf günstige Werte einstellen ohne Austauschen von in der Figur 2 gezeigten Drosseln 40, 40a.

Eine weitere Maßnahme im Sinne einer Geräuschminderung ist eine Weiterbildung des Steuergerätes 16b in der Weise, daß es die Drehzahl des Antriebsmotors 34 der Rückförderpumpen 32 und 33 vermindern kann, wenn relativ kleine Bremsdruckänderungsgeschwindigkeiten im Blockierschutzbetrieb ausreichen.

Die erfindungsgemäße Fahrzeugbremsanlage 1c gemäß der Figur 4 unterscheidet sich von der Fahrzeugbremsanlage 1b der Figur 3 dadurch, daß anstelle einfach ausgebildeter zweiter Ventile 30 und 31 der Figur 3 nunmehr zwischen die Hauptbremsleitungen 21 bzw. 24 und die Radbremsleitungen 23 bzw. 26 Stetig-Wegeventile 30b bzw. 31b eingebaut sind, die identisch in Ausbildung und Baugröße sein können wie die ersten Stetig-Ventile 28b und 29b. Dadurch läßt sich der beschriebene Vorteil auch zwischen dem Hauptbremszylinder 2 und den Radbremszylindern 13 bzw. 14 erreichen.

Die erfindungsgemäße Fahrzeugbremsanlage 1d der Figur 5 unterscheidet sich von der Fahrzeugbremsanlage 1 gemäß der Figur 1 dadurch, daß erste Ventile 28d und 29d als Differenzdruckventile ausgebildet sind, die in ihren Grundstellungen beispielsweise in zwei Richtungen durchströmbar sind und bei denen Druckdifferenzen zwischen den Hauptbremsleitungen 21 bzw. 24 und den Radbremsleitungen 22 bzw. 25 einstellbar sind mittels Elektromagneten 41d bzw. 42d, wobei zur Symbolisierung von variabel einstellbarer Magnetkraft Pfeile über die Elektromagnete 41d und 42d gezeichnet sind. Je stärker die eingestellte Magnetkraft ist, desto größer ist eine Druckdifferenz zwischen dem Hauptbremszylinder 2 und den Radbremszylindern 9 bzw. 10. Durch entsprechende Ausbildung des Steuergeräts 16d kann dieses über die Ventile 28d, 29d bei laufenden Rückförderpumpen 32 und 33 Bremsschlupf von Vorderrädern auf jeweils günstige Größen einstellen. Wiederum besteht die Möglichkeit, eine gegebenenfalls notwendige Änderung der Erregung der Elektromagnete 41d bzw. 42d so auszuführen, daß ruckartige Strömungsänderungen weitgehend vermeidbar sind. Wie im Ausführungsbeispiel gemäß der Figur 3 kann das Steuergerät 16d so ausgebildet sein, daß es die Drehzahl des Antriebsmotors 34 nur unwesentlich über diejenige Drehzahl einstellt, die bedingungsabhängig momentan im Blockierschutzbetrieb notwendig ist zur Veränderung von Bremsdruck.

Die Fahrzeugbremsanlage 1e der Figur 6 unterscheidet sich von der Fahrzeugbremsanlage 1d der Figur 5 dadurch, daß nunmehr auch die zweiten Ventile 30d und 31d als Differenzdruckventile ausgebildet sind. Beispielsweise sind die zweiten Ventile 30d, 31d in der gleichen Bauart und Baugröße ausgebildet wie die ersten Ventile 28d und 29d, die aus der Figur 5 übernommen sind. Dadurch werden Vorteile, die im Blockierschutzbetrieb von den ersten Ventilen 28d und 29d resultieren, auch bei Bremsdruckveränderungen in den Radbremsleitungen 23 und 26 bzw. den daran angeschlossenen Radbremszylindern 13 bzw. 14 erreicht.

Es ist also erkennbar, daß das erfindungsgemäße Prinzip des Einbauens eines elektrisch steuerbaren Ventils zwischen dem Hauptbremszylinder und Radbremszylinder von einer Hinterradbremse und das Anschließen des Radbremszylinders dieser Hinterradbremse über eine Drossel an ein Eingangsrückschlagventil von einer Rückförderpumpe im jeweiligen Bremskreis mit sehr unterschiedlich ausgebildeten elektrisch steuerbaren Ventilen möglich ist.

Die hydraulische Fahrzeugbremsanlage 1f gemäß dem Schaltplan der Figur 9 geht aus von der hydraulischen Fahrzeugbremsanlage 1 gemäß der Figur 1 und weist deshalb für den Blockierschutzbetrieb innerhalb eines Ventilaufnahmeblockes 27f erste Ventile 28f und 29f sowie zweite Ventile 30, 31, Rückförderpumpen 32, 33, Drosseln 35, 36, Rückschlagventile 37f, 38f und weitere Rückschlagventile 39 auf. Zur Durchführung von Antriebsschlupfregelbetrieb sind in den Ventilaufnahmeblock 27f zusätzlich je Bremskreis I und II eine dritte elektrisch steuerbare Ventilanordnung 52 bzw. 53 zwischen den Hauptbremszylinder 2 und das jeweils erste Ventil 28f bzw. 29f und dabei auch zwischen den jeweiligen Ausgang 50 der jeweiligen Rückförderpumpe 32 bzw. 33 sowie den Hauptbremszylinder 2 eingebaut. Somit kann jede Rückförderpumpe 32, 33 Druckmittel sowohl gegen das jeweilige erste Ventil 28f bzw. 29f und die jeweilige dritte Ventilanordnung 52 bzw 53 fördern. Jede dritte Ventilanordnung 52 bzw 53 wirkt einerseits als ein 2/2-Wegeventil, das von einer Feder 52a bzw. 53a in die dargestellte Grundstellung, die eine Durchflußstellung ist, gedrückt wird. Die dritten Ventilanordnungen sind je mit einem Elektromagnet 54 ausgestattet, mittels dem die jeweilige dritte Ventilanordnung umschaltbar ist auf eine Druckbegrenzungsfunktion. Zu diesem Zweck ist je in ein zweites Quadrat der Symbole für die dritten elektrischen steuerbaren Ventilanordnungen 52 und 53 das Symbol für ein Differenzdruckventil 55 eingezeichnet. Des weiteren ist in das Symbol eine Druckdifferenzfeder 56 eingebaut, die ein Druckgefälle vom Ausgang der jeweiligen Rückförderpumpe 50 zum Hauptbremszylinder 2 bestimmt. Dieses Druckgefälle wird gewählt in derjenigen Größe, die man als größten Bremsdruck für den nachfolgend beschriebenen Antriebsschlupfregelbetrieb benötigt. Eine in solcher Art wirkende dritte Ventilanordnung ist dem Stand der Technik entnehmbar, beispielsweise der Druckschrift WO 94/08831. Die in dieser Druckschrift beschriebene Ventilanordnung weist an einem einsteckbaren Gehäuseteil, das in einen halsförmigen Teil übergeht, eine Lippendichtung auf, die zusammen mit einem nicht gezeichneten Ventilgehäuseblock ein Rückschlagventil bildet. Auch den dritten Ventilanordnungen 52, 53 der Figur 9 kann jeweils ein in solcher Art ausgebildetes Rückschlagventil zugeordnet sein, das hier mit dem Symbol eines federbelasteten Rückschlagventils 57 dargestellt ist und einen mittels Druck aus dem Hauptbremszylinder 2 öffenbaren Bypass um die dritte Ventilanordnung 52 bildet. Gemäß der Druckschrift WO 94/08831 bildet jede dritte Ventilanordnung 52, 53 und das jeweils zugeordnete Rückschlagventil 57 eine integrale Baugruppe. Abweichend von dieser Konstruktion ist es natürlich auch möglich, das jeweilige Rückschlagventil 57 separat einzubauen und anstelle einer integralen Anordnung eines Wegeventils mit der Eigenschaft eines Bremsdruck begrenzenden Ventils ein separates 2/2 -Wegeventil und ein separates Differenzdruckventil in einen dann abgewandelten Ventilaufnahmeblock einzubauen.

Für den erwähnten Antriebsschlupfregelbetrieb sind in den Gehäuseblock 27f zusätzlich vierte Ventilanordnungen 60, 61 eingebaut. Gemäß der Figur 9 enthält jede vierte Ventilanordnung ein erstes 2/2-Wegeventil 62 und ein zweites 2/2-Wegeventil 63. Das erste 2/2-Wegeventil 62 weist eine Öffnungsfeder 64 und einen Elektromagnet 65 zum Schließen auf und ist demgemäß ein normal offen stehendes 2/2-Wegeventil 62. Das erste 2/2-Wegeventil 62 weist einen Eingang 66 auf, der mit dem jeweiligen Radbremszylinder 9 bzw. 10 einer Vorderradbremse 7 bzw. 8 und dem jeweiligen Rückschlagventil 37f bzw. 38f verbunden ist. Das erste 2/2-Wegeventil 62 weist des weiteren auch einen Ausgang 67 auf, an den jeweils ein Eingang 49 einer Rückförderpumpe 32 bzw 33 angeschlossen ist.

Das zweite 2/2-Wegeventil 63 besitzt eine Schließfeder 68 und einen Elektromagnet 69 zum Überwinden der Schließkraft der Schließfeder 68. Ein Eingang 70 des zweiten 2/2-Wegeventils 63 ist jeweils an den Hauptbremszylinder 2 angeschlossen und ein Ausgang 71 dieses zweiten 2/2-Wegeventils 63 ist mit dem Eingang 49 der jeweiligen Rückförderpumpe 32 bzw. 33 verbunden.

Ein Steuergerät 16f unterscheidet sich von dem Steuergerät 16 gemäß der Figur 1 dadurch , daß es außer zum Erkennen von Radblockiergefahr beim Bremsen per Betätigung des Bremspedals 4 zusätzlich eingerichtet ist zum Erkennen von übermäßigem Antriebsschlupf oder gar Durchdrehgefahr von antreibbaren Vorderrädern, die den Vorderradbremsen 7 und 8 zugeordnet sind. Hierfür vergleicht das Steuergerät 16f beispielsweise von den Raddrehungssensoren 17, 18 abgegebene Signalfolgen mit Signalfolgen aus Raddrehungssensoren 19, 20, die nicht angetriebenen Hinterrädern zugeordnet sind. Demgemäß ist die innerhalb des Ventilaufnahmeblocks 27f untergebrachte Einrichtung 15f eine Radschlupfregeleinrichtung zum Vermeiden von übermäßigen Radschlüpfen beim Bremsen per Bremspedalbetätigung oder beim Antreiben von Vorderrädern.

Radschlupfregelung zur Vermeidung von Radblockiergefahr beim Bremsen per Betätigung des Bremspedals 4 wird vorgenommen in einer für die Fahrzeugbremsanlage 1 gemäß der Figur 1 beschriebenen Weise. Dabei verbleiben die dritten Ventilanordnungen 52, 53 und die vierten Ventilanordnungen 60, 61 in den gezeichneten und beschriebenen Stellungen.

Angenommen, ein Antriebsschlupf wird an demjenigen Vorderrad größer und größer, das der Vorderradbremse 7 zugeordnet ist, so schaltet das Steuergerät 16f den Antriebsmotor 34 für die Rückförderpumpen 32, 33 ein, schaltet den Elektromagnet 54 der dritten Ventilanordnung 52 ein, so daß diese geschlossen wird, steuert das zweite 2/2- Wegeventil 63 der vierten Ventilanordnung 60 in die Öffnungsstellung und das zweite Ventil 30 und das erste 2/2-Wegeventil 62 der vierten Ventilanordnung 60 in die Schließstellung. Als Folge davon versorgt sich die hierfür selbstansaugend ausgebildete Rückförderpumpe 32 durch das zweite 2/2-Wegeventil 63 der vierten Ventilanordnung 60 und durch die Hauptbremsleitung 21 und den Hauptbremszylinder 2 mit Druckmittel aus dem Vorratsbehälter 3 und drückt dieses Druckmittel durch das offen stehende erste Ventil 28f hindurch zum Radbremszylinder 9 der Vorderradbremse 7. Hierbei verhindert die dritte Ventilanordnung 52 den Abfluß des Druckmittels zum Hauptbremszylinder 2 und in den Vorratsbehälter 3. Infolgedessen entsteht in dem Radbremszylinder 9 Bremsdruck, der umso mehr ansteigt, je länger die Rückförderpumpe 32 Druckmittel fördert. Ansteigender Bremsdruck in dem Radbremszylinder 9 bewirkt, daß das zugeordnete Antriebsrad zunehmend gebremst wird und dabei ein auf das gebremste Antriebsrad wirkendes Bremsmoment einen Antriebsmomentüberschuß zu kompensieren beginnt. Bei Überkompensation verlangsamt sich die Drehzahl des Vorderrades relativ zur Drehzahl eines sich beispielsweise frei drehenden Rades des Fahrzeugs, so daß der Radschlupf kleiner wird.

Stellt das Steuergerät 16f fest, daß beispielsweise der Radschlupf auf eine zulässige Größe geschrumpft ist, wird beispielsweise das erste Ventil 28f geschlossen, mit der Folge, daß in dem Radbremszylinder 9 enthaltener Bremsdruck nicht größer wird. Da ab dem Schließen des ersten Ventils 28f die Rückförderpumpe 32 Druckmittel im Überschuß liefert, wird bei Erreichen einer Druckdifferenz zwischen dem Ausgang 50 der Rückförderpumpe 32 und dem Hauptbremszylinder 2 in Höhe des projektierten höchsten Druckes für den Antriebsschlupfregelbetrieb die dritte Ventilanordnung 52 unter Überwindung der Kraft der Druckdifferenzfeder 56 geöffnet, so daß im Überschuß gefördertes Druckmittel zum Hauptbremszylinder 2 strömt und von dort aus erneut durch das zweite Wegeventil 63 der vierten Ventilanordnung 60 im Eingang 90 der Rückförderpumpe 32 zur Verfügung steht. Weil normalerweise im Antriebsschlupfregelbetrieb das Bremspedal 4 nicht betätigt ist, ist der Hauptbremszylinder 2 normalerweise drucklos, so daß das Druckdifferenzventil 55 der dritten Ventilanordnung 52 als ein Sicherheitsventil wirkt.

Aus der Wirkung "Sicherheitsventil" ergibt sich, daß in dem Druckdifferenzventil 55 Leistung in Energieverlust umgesetzt wird. Dies ist vermeidbar, wenn das Steuergerät 16f derart eingerichtet wird, daß im Antriebsschlupfregelbetrieb ab dem Schließen des ersten Ventils 28f der Elektromagnet 54 der dritten Ventilanordnung 52 stromlos gemacht wird, so daß die Feder 52a die dritte Ventilanordnung 52 öffnet und die Rückförderpumpe 32 dadurch ohne wesentliche Druckerzeugung Druckmittel fördert, also im wesentlichen wie im Leerlauf arbeitet.

Wenn Antriebsschlupf ausreichend kleiner geworden ist, beispielsweise weil das angetriebene Vorderrad auf eine Zone der Fahrbahn, die einen höheren Reibwert aufweist, gelangt, so wird weniger oder gar kein Bremsdruck in dem Radbremszylinder 9 der Vorderradbremse 7 benötigt. Infolgedessen ist der Radbremsdruck abzusenken, was in der einfachsten Weise durch das beschriebene Öffnen der dritten Ventilanordnung 52 und zusätzlich durch Öffnen des ersten Ventils 28f erzeugbar ist. Dies funktioniert jedenfalls dann, wenn das Bremspedal 4 nicht betätigt ist.

Sollte das Bremspedal 4 betätigt sein, was das Steuergerät 16f beispielsweise an einem Signal aus einem Pedalstellungsschalter bzw. Bremslichtschalter 80 erkennt, so wird es das erste Ventil 28f geschlossen halten oder in die Schließstellung steuern, das zweite Wegeventil 63 der vierten Ventilanordnung 60 in die Schließstellung zurückkehren lassen und das erste Wegeventil 62 der vierten Ventilanordnung 60 offen stehen lassen, so daß die Rückförderpumpe 32 Druckmittel aus dem Radbremszylinder 9 aufnehmen und gegen einen im Hauptbremszylinder 2 vorhandenen Druck durch den Hauptbremszylinder 2 zum Vorratsbehälter 3 zurückfördert. Sobald dadurch der Vorderradantriebsschlupf ausreichend abgesunken ist, kann das Steuergerät das erste 2/2-Wegeventil 62 der vierten Ventilanordnung 60 in die Schließsstellung zurückkehren lassen und im wesentlichen gleichzeitig das erste Ventil 28f in die Öffnungsstellung zurückkehren lassen, so daß ein Fahrer per Betätigung des Bremspedals 4 in gewollter Weise Bremsdruck in dem Vorderradbremszylinder 9 erzeugen kann. Da gleichzeitig auch die Hinterradbremse 11 zur Wirkung kommen soll, wird das Steuergerät 16f auch das zweite Ventil 30 in seine Durchgangsstellung zurückkehren lassen. Demgemäß steht derjenige Teil der Fahrzeugbremsanlage 1f, der dem Bremskreis I zugeordnet und an die Hauptbremsleitung 21 angeschlossen ist, uneingeschränkt zum gewollten Verzögern des Fahrzeugs zur Verfügung.

Die beschriebene Art der Radschlupfregelung für nachteilig anwachsendem Antriebsschlupf eines der Vorderradbremse 7 zugeordneten Vorderrades ist auch analog durchführbar für ein antreibbares Vorderrad, das der Vorderradbremse 8 des Bremskreises II, der an die Hauptbremsleitung 24 angeschlossen ist, zugeordnet ist. Demgemäß ist das Steuergerät 16f eingerichtet, Ventile im Bremskreis II gleichartig zu steuern wie dies für Ventile des Bremskreises I beschrieben ist. Je nach vorliegenden Antriebsschlupfverhältnissen kann beispielsweise das Steuergerät 16f auch gleichzeitig die Radbremszylinder 9 und 10 beider Vorderradbremsen 7 und 8 mit Bremsdruck zur Antriebsschlupfverminderung versorgen.

Der Schaltplan der Figur 9 weist gegenüber dem Schaltplan der Figur 1 Unterschiede auf. So fehlen beispielsweise in Rückschlagventilen 37f und 38f der Figur 9 die in der Figur 1 vorhandenen Symbole für Federn. Im Unterschied zu einer separat und dabei in Reihe am ersten Ventil 28 angeordneten Drossel 40 ist das erste Ventil 28f sowie auch das andere erste Ventil 29f selbst als Drossel 40f wirkend ausgebildet, was beispielsweise durch Justieren der Weite eines Ventilspaltes bei geöffnetem Ventil 28f erreichbar ist. Hierfür werden beispielsweise in an sich bekannter Weise Ankerhübe begrenzende Mittel, die nicht dargestellt sind, justiert. Andererseits können natürlich auch gemäß der Figur 1 Drosseln 40 in Reihe zu den ersten Ventilen angeordnet werden. Diese ersten Ventile würden dann wieder eine Bezeichnung "28" gemäß der Figur 1 erhalten.

Das Weglassen der Federn aus den Rückschlagventilen 37f und 38f ermöglicht es, bei geschlossenen zweiten Ventilen 30 und 31, daß Radbremsdrücke in den Radbremszylindern 13 und 14 der Hinterradbremsen 11 und 12 absenken können auf diejenigen Radbremsdrücke, die in den Radbremszylindern 9 und 10 der Vorderradbremsen 7 und 8 herrschen. Daraus ist erkennbar,daß bei beispielsweise nachteiligerweise geschlossenem ersten Ventil 28f beziehungsweise 29f durch die parallel liegenden Rückschlagventile 39 beim Loslassen des Bremspedals 4 Druckmittelmengen durch die Rückschlagventile 39 strömen, so daß in gewollter Weise Radbremsdrücke verschwinden.

Die Figuren 3, 4, 5 und 6 offenbaren, daß in der Figur 1 dargestellte erste und zweite Ventile 28, 29, 30 und 31 des 2/2-Wegeventiltyps substituierbar sind beispielsweise durch stetig verstellbare Wegeventile oder durch stetig verstellbare Differenzdruckventile. Demgemäß sind die der Antriebsschlupfregelung dienenden Ventilanordnungen 52, 53, 60, 61 nicht auf die Kombination mit denjenigen dem Blockierschutz dienenden Ventilanordnungen gemäß der Figur 9 beschränkt, sondern die Ventilanordnungen 52, 53, 60 und 61 sind auch kombinierbar mit den Fahrzeugbremsanlagen gemäß den Figuren 3 bis 6.

Ein weiteres Ausführungsbeispiel einer der Radbremsschlupfregelung beim Bremsen per Bremspedalbetätigung und auch zur Kompensation von überschüssigem Antriebsdrehmoment an antreibbaren Rädern dienenden Fahrzeugbremsanlage 1g ist in der Figur 10 dargestellt. Bei dieser Fahrzeugbremsanlage 1g wurde ebenfalls von der Fahrzeugbremsanlage 1 gemäß der Figur 1 ausgegangen, wobei dritte Ventilanordnungen identisch sind mit den bereits beschriebenen dritten Ventilanordnungen 52 und 53 der Figur 9. Jedoch unterscheiden sich vierte Ventilanordnungen 60g und 61g von den vierten Ventilanordnungen 60 und 61 der Figur 9 dadurch, daß zum Steuern der vierten Ventilanordnungen 60g und 61g keine Elektromagnete benötigt werden. Die vierten Ventilanordnungen sind deshalb ausgebildet als 3/2-Wegeventile 73, die je eine eine Grundstellung bestimmende Feder 74 und einen Steuereingang 75 aufweisen. Je ein Steuerkanal 76, der zu dem jeweiligen Steuereingang 75 führt, kommuniziert durch einen Ventilaufnahmeblock 27g hindurch sowie die Hauptbremsleitung 21 bzw. 24 mit dem Hauptbremszylinder 2. Eine Betätigung des Bremspedals 4 mit der Folge, daß aus dem Hauptbremszylinder 2 Druckmittel austritt, bewirkt durch die Hauptbremsleitung 21 und den Steuerkanal 76 sowie den Steuereingang 75, daß die Feder 74 zusammengedrückt wird.

Jede vierte Ventilanordnung 60g, 61g hat einen ersten Anschluß 77, einen zweiten Anschluß 78 und einen dritten Anschluß 79. Dies ergibt mit dem voranstehenden Hinweis auf die durch Druckmittelzufuhr in den Steuereingang 75 bewirkte Zusammendrückung der jeweiligen Feder 79, daß die vierte Ventilanordnung 60g bzw. 61g der Figur 10 ein sogenanntes 3/2-Wegeventil ist. Der erste Anschluß 77 jedes der der vierten Ventilanordnungen 60g bzw 61g ist hydraulisch permanent mit dem Hauptbremszylinder 2 durch die jeweilige Hauptbremsleitung 21 bzw 24 verbunden. Der zweite Anschluß 78 ist jeweils permanent mit einem Radbremszylinder 9 bzw. 10 einer Vorderradbremse 7 bzw 8 verbunden. Der dritte Anschluß 79 kann als Ventilausgang bezeichnet werden und ist mit dem Eingang 49 der jeweiligen Rückförderpumpe 32 bzw 33 verbunden. Gemäß der Figur 10 besteht somit bei nichtbetätigtem Bremspedal 4 eine hydraulische Verbindung ausgehend von dem Vorratsbehälter 3 durch den Hauptbremszylinder 2, durch die jeweilige Hauptbremsleitung 21 bzw 24 und durch den jeweils ersten Anschluß 77 und durch den dritten Anschluß 79 zur jeweiligen Rückförderpumpe 32 bzw 33, so daß diese sich nach dem Einschalten des Antriebsmotors 34 selbst mit Druckmittel aus dem Vorratsbehälter 3 versorgen können. Wird dagegen durch Betätigung des Bremspedals 4 Steuerdruck in den jeweiligen Steuereingang 75 eingeleitet, so schaltet, wie bereits erwähnt, die jeweilige vierte Ventilanordnung 60g bzw 61g in die Schaltstellung um, wodurch der jeweils erste Anschluß 77 und also auch der Vorratsbehälter 3 von der jeweiligen Rückförderpumpe 32 bzw. 33 getrennt wird und dafür der jeweilige Radbremszylinder 9 bzw. 10 durch den jeweiligen zweiten Anschluß 78 mit der Rückförderpumpe 32 bzw. 33 verbunden wird.

Ein zu der Fahrzeugbremsanlage 1g gehörendes Steuergerät 16g unterscheidet sich von dem Steuergerät 16f des Ausführungsbeispieles der Figur 9 dadurch, daß nunmehr das Steuergerät 16g lediglich die aus dem Ausführungsbeispiel der Figur 9 übernommenen dritten Ventilanordnungen 52 bzw 53 zu steuern hat. Insoweit ergibt sich gegenüber dem Ausführungsbeispiel der Figur 9 eine Verbilligung bezüglich der Elektronik und Elektrik.

Bei Betätigung des Bremspedals 4 zum Zwecke des Bremsens wird in der bereits beschriebenen Weise die jeweilige vierte Ventilanordnung 60g bzw 61g hydraulisch in die Schaltstellung gesteuert mit der Folge, daß die Eingänge 49 der Rückförderpumpen 32 bzw. 33 mit den zugeordneten Radbremszylindern 9 bzw 10 kommunizieren, so daß bei zu kräftiger Betätigung des Bremspedals 4 und also dem Entstehen einer Radblockiergefahr die Rückförderpumpen 32 und 33 im Überschuß in den Radbremszylindern 9 bzw. 10 enthaltenes Druckmittel zum Hauptbremszylinder 2 zurückfördern können zum Zwecke der Bremsdruckabsenkung. Hierfür wird in bereits beschriebener Weise der Antriebsmotor 34 eingeschaltet und wenigstens ein jeweils erstes Ventil 28g bzw. 29g in die Sperrstellung gesteuert, abhängig davon, welches der den Vorderradbremsen 7 und 8 zugeordneten Vorderräder einer beginnenden Blockiergefahr unterliegt. Dabei sind die dritten Ventilanordnungen 52 und 53 in ihren Grundstellungen, die, wie bereits beschrieben, von Federn 52a und 53a bestimmt sind. Im Falle einer Radblockiergefahr an wenigstens einem der Hinterräder, denen die Hinterradbremsen 11 und 12 zugeordnet sind, werden, so wie dies für das erste Ausführungsbeispiel gemäß der Figur 1 beschrieben ist, wenigstens ein zweites Ventil 30 bzw. 31, bedingungsabhängig, in die Schließstellung gesteuert, wodurch Zulauf von Druckmittel durch die genannten Ventile hindurch in die Radbremszylinder 13 bzw. 14 der Hinterradbremsen 11 bzw. 12 unterbindbar ist und demgemäß die Rückförderpumpe 32 bzw 33 Druckmittel aus dem betreffenden Radbremszylinder 13 bzw. 14 durch die jeweils zugeordnete Drossel 35 bzw. 36 und die Rückschlagventile 37f bzw. 38f entnehmen und zum Hauptbremszylinder 2 zurückdrücken kann, bis die Radblockiergefahr am jeweiligen Hinterrad verschwindet.

Antriebsschlupfregelbetrieb findet im allgemeinen statt, wenn das Bremspedal 4 nicht betätigt ist, weil ein Fahrer mittels eines nicht dargestellten Fahrpedals das Antriebsmoment für antreibbare Vorderräder steuert. Infolge dessen befindet sich jede vierte Ventilanordnung 60g und 61g in der gezeichneten Grundstellung.

Sollte nun beispielsweise an einem angetriebenen Vorderrad, das zur Vorderradbremse 7 gehört, Antriebsschlupf unzulässig anwachsen, so erkennt das Steuergerät 16g diese Gefahr aufgrund von Folgen von Signalen aus dem zugeordneten Raddrehungssensor 17. Infolgedessen wird das Steuergerät 16g den Antriebsmotor 34 der Rückförderpumpen 32 und 33 einschalten und, wie im Ausführungsbeispiel gemäß der Figur 9, die dritten Ventilanordnungen 52 und 53 steuern, damit sie als benötigte Druckdifferenzventile wirken zur Begrenzung eines höchsten Druckgefälles zwischen den Ausgängen 50 der Rückförderpumpen 32 und 33 und den Hauptbremsleitungen 21 und 24. Bei noch geöffnetem ersten Ventil 28g wird die Rückförderpumpe 32 aus der Hauptbremsleitung 21 und dem Vorratsbehälter 3 entnommenes Druckmittel in den Radbremszylinder 9 pumpen, so daß dadurch Radbremsdruck und Radbremsmoment entsteht, das einen Antriebsmomentüberschuß am Vorderrad, der zur Auslösung der Antriebsschlupfregelung geführt hat, wenigstens kompensiert. Dadurch wird der Antriebsschlupf vermindert. Ist der Antriebsschlupf ausreichend vermindert, kann beispielsweise das erste Ventil 28g geschlossen werden, so daß kein weiterer Bremsdruckanstieg mehr in dem Radbremszylinder 9 zustandekommt. Erkennt das Steuergerät 16g, daß Antriebsschlupf unter eine kritische Schwelle sinkt, so kann es die dritte Ventilanordnung 52 in die gezeichnete Grundstellung zurückkehren lassen mit der Folge, daß durch das Rückschlagventil 39 hindurch Druckmittel aus dem Radbremszylinder 9 und durch die dritte Ventilanordnung 52 und die Hauptbremsleitung 21 und durch den Hauptbremszylinder 2 hindurch in den Vorratsbehälter 3 zurückfließt. Dies kann beispielsweise erfolgen bei noch geschlossenem ersten Ventil 28g. Eine völlige Entlastung von Radbremsdruck des Radbremszylinders 9 wird erreicht durch Zurückschalten des ersten Ventiles 28g in die gezeichnete Grundstellung.

Zusätzlich zur voranstehend beschriebenen Weise des Erzeugens von Radbremsdruck in dem Radbremszylinder 9, zum Konstanthalten und zum Absenken von Radbremsdruck gibt es noch die Möglichkeit, wegen der bei nicht betätigtem Bremspedal 4 vorhandenen permanenten Verbindung zwischen dem Vorratsbehälter 3 und dem Eingang 49 zur Rückförderpumpe 32 bei offen stehendem ersten Ventil 28g Bremsdruckanstieg und Bremsdrucksenkungen in den Radbremszylinder 9 zu steuern durch Hin- und Hersteuern der dritten Ventilanordnung 52 zwischen der gezeichneten Grundstellung und derjenigen Stellung, die die Funktion eines Differenzdruckregelventiles ergibt. Es werden dann bei in die zweite Stellung gesteuerter dritter Ventilanordnung jeweils von der Rückförderpumpe 32 Bremsdruckanstiege in dem Radbremszylinder erzeugt und dann, wenn das Steuergerät 16g eine ausreichende Antriebsüberschußmoment-Kompensation erkannt hat, die dritte Ventilanordnung 52 in die Grundstellung, die durch die Feder 52s bestimmt ist, zurück gelassen. Bei dieser Methode der Steuerung der dritten Ventilanordnung 52 zum Zwecke der Antriebsschlupfregelung folgen Bremsdruckanstiege und Bremsdrucksenkungen aufeinander mit einem sägezahnähnlichen Bremsdruckverlauf. Ein solcherart sägezahnähnlicher Verlauf der Bremsdrücke ist typisch für einen sogenannten Zweipunktregler, der relativ einfach realisierbar ist.

Der beschriebene Antriebsschlupfregelbetrieb lediglich durch Einschalten des Antriebsmotors 34 der Rückförderpumpe 32 und durch Hin- und Hersteuern der dritten Ventilanordnung 52 mittels der Feder 52a oder des aus dem Beispiel der Figur 9 entnommenen Elektromagnets 54 ergibt den Vorteil, daß die Rückförderpumpe 32 lediglich den Druck zu erzeugen hat, den man zur Antriebsmomentüberschußkompensation benötigt. Ein solcher Radbremsdruck kann wesentlich geringer sein als diejenige Druckdifferenz, die die dritte Ventilanordnung 52 beim Einschalten des Elektromagnets 54 relativ zum Druck im Hauptbremszylinder 2 bei nicht betätigtem Bremspedal 4 erzeugt. Erkennbar wird in einem solch günstig liegenden Fall weniger Energie zum Antreiben der Rückförderpumpe 32 verbraucht und auch weniger Geräusch erzeugt.

Es versteht sich von selbst, daß ein mittels der Vorderradbremse 8 des Bremskreises II zu kompensierender Antriebsmomentüberschuß eines zugeordneten nicht dargestellten Vorderrades in gleicher Weise wie für das dem Bremskreis I und der Vorderradbremse 7 zugeordnete Antriebsrad durchführbar ist. Zufallsbedingt kann Antriebsschlupfregelbetrieb beispielsweise gleichzeitig in beiden Bremskreisen I und II oder abwechselnd oder einander überschneidend erfolgen.

Die Ausführungsbeispiele gemäß den Figuren 9 und 10 zeigen, daß für vierte Ventilanordnungen zwei unterschiedliche Pfade für Druckmittel zu den Eingängen 49 der Rückförderpumpen 32 und 33 zu schalten sind. Dies wird im Beispiel der Figur 9 durch zur Verfügungstellung von zwei verschließbaren Ventilsitzen, die nicht dargestellter Weise auf die beiden 2/2-Wegeventile 62, 63 verteilt sind, je einem Bremskreis bzw. einer der Rückförderpumpen 32 bzw. 33 erreicht. Im Ausführungsbeispiel gemäß der Figur 10 weist die vierte Ventilanordnung 60g bzw 61g drei Anschlüsse 77, 78 und 79 auf, wobei bei der Ausführung als Sitzventilanordnungen dem Stand der Technik gemäß zum ersten Anschluß 77 ein nicht dargestellter Ventilsitz und zum zweiten Anschluß 78 ein nicht dargestellter zweiter Ventilsitz gehören. Daraus ist erkennbar, daß als vierte Ventilanordnungen 60g und 61g wahlweise Wegeventile des Typs 3/2-Wegeventile oder Kombinationen aus je zwei Stück 2/2-Wegeventilen verwendbar sind. Des weiteren ist auch erkennbar, daß die vierten Ventilanordnungen entweder hydraulisch oder elektromagnetisch steuerbar ausgebildet sein können. Daraus ergibt sich nun wiederum für den auf dem Gebiet von Radschlupfregeleinrichtungen tätigen Fachmann, daß man zur Erfüllung der Aufgabe der vierten Ventilanordnungen 2/2-Wegeventile hydraulisch steuern kann oder ein 3/2-Wegeventil elektromagnetisch steuern kann. Demgemäß ist die Weiterbildung von Blockiereinrichtungen gemäß den Figuren 1, 3, 4, 5 und 6 nicht eingeschränkt auf diejenigen dritten und vierten Ventilanordnungen, die in den Figuren 9 und 10 dargestellt sind.

In den Figuren 9 und 10 sind im Unterschied zu der Figur 1 die Rückschlagventile 37f und 38f ohne Federn dargestellt. Die Rückschlagventile 37f und 38f sind deshalb beispielsweise als Sitzventile ausgeführt mit Ventilkugeln, die beispielsweise durch ihr eigenes Gewicht die Ventilsitze zu schließen vermögen. Da solche Ventilkugeln bekanntermaßen innerhalb von Fahrzeugbremsanlagen sehr klein und deshalb leicht sind, könnte man die Ventilsitze auch oberhalb der Kugeln einbauen, so daß ein Druckgefälle beispielsweise von dem Vorderradbremszylinder 9 zu dem Hinterradbremszylinder 13 eine Strömung verursacht, die die Ventilkugel in den Ventilsitz hebt. Auf diese Weise ist es dann auch im Antriebsschlupfregelbetrieb möglich, einen zur Antriebsmomentüberschuß-Kompensation notwendigen Vorderradbremsdruck, der in dem Vorderradbremszylinder 9 wirksam ist, von dem Hinterradbremszylinder 13 weitgehendst fernzuhalten.

Im Unterschied zu den mit Federn dargestellten Rückschlagventilen 39 der Figuren 1 bis 6 und 9 sind in der Figur 10 Rückschlagventile 39g ohne Federn dargestellt. Ventilsitze der Rückschlagventile 39g werden bevorzugt unterhalb der beispielsweise als Kugeln ausgebildeten Schließkörper angeordnet. Weil die federlosen Rückschlagventile 39g mittels weniger Druckgefälle öffenbar sind, können bei geschlossenen ersten Ventilen 28g, 29g Bremsdrücke der Radbremszylinder 9, 10 tiefer absinken als bei den zuvor beschriebenen Ausführungsbeispielenn. Dies ist vorteilhaft beim Fahren über Eis und Schnee und kann auch das Bremsdruckabsenken beschleunigen. Der genannte Vorteil ist natürlich auch übertragbar in die Ausführungsbeispiele der Figuren 1 bis 6 und 9.

## Patentansprüche

1. Hydraulische Fahrzeugbremsanlage (1; 1a; 1b; 1c; 1d; 1e; 1f; 1g) mit einem zweikreisigen Hauptbremszylinder (2), mit zwei Bremskreisen (I, II) in Diagonal-Aufteilung für zwei Vorderradbremsen (7, 8) und zwei Hinterradbremsen (11, 12) und mit einer in die Bremskreise (I, II) eingebauten Blockierschutzeinrichtung (15, 15a, 15b, 15c, 15d, 15e, 15f, 15g), die je Bremskreis (I, II) eine Rückförderpumpe (32, 33) mit einem Eingang (49) in Form eines Eingangsrückschlagventils und einem Ausgang (50) in Form eines Ausgangsrückschlagventils und ein erstes und ein zweites elektrisch steuerbares Ventil (28, 29, 30, 31), die normal offen stehen, aufweist, wobei zwischen dem Hauptbremszylinder (2) und der jeweiligen Vorderradbremse (7, 8) das erste Ventil (28, 29) angeordnet ist, wobei das zweite Ventil (30, 31) mit der jeweiligen Hinterradbremse (11, 12) verbunden ist und dabei zwischen der jeweiligen Hinterradbremse (11, 12) und dem Hauptbremszylinder (2) angeordnet ist und wobei wenigstens die Hinterradbremsen (11, 12) über Drosseln (35, 36) mit den Eingängen (49) in Form von Eingangsrückschlagventilen der Rückförderpumpen (32, 33) verbunden sind und zum Steuern der ersten und der zweiten Ventile (28, 29, 30, 31) und der Rückförderpumpen (32, 33) im Blockierschutzbetrieb ein Steuergerät (16, 16b, 16c, 16d, 16e, 16f, 16g) vorgesehen ist, **dadurch gekennzeichnet, daß** jeweils in Reihe zu der der Hinterradbremse (11, 12) zugeordneten Drossel (35, 36) ein in Richtung des Eingangs (49), der in Form eines Eingangsrückschlagventils ausgebildet ist, der Rückförderpumpe (32, 33) öffenbares Rückschlagventil (37, 38) eingebaut ist.

2. Hydraulische Fahrzeugbremsanlage nach Anspruch 1, **dadurch gekennzeichnet, daß** wenigstens eines der Ventile (28, 29, 30 , 31) als ein 2/2-Wegeventil ausgebildet ist.

3. Hydraulische Fahrzeugbremsanlage nach Anspruch 2, **dadurch gekennzeichnet, daß** eine weitere Drossel (40) mit dem 2/2-Wegeventil (28, 29, 30, 31) in Reihe geschaltet ist.

4. Hydraulische Fahrzeugbremsanlage nach Anspruch 1, **dadurch gekennzeichnet, daß** wenigstens eines der Ventile als ein Stetig-Wegeventil (28b, 29b, 30b, 31b) ausgebildet ist.

5. Hydraulische Fahrzeugbremsanlage nach Anspruch 1, **dadurch gekennzeichnet, daß** wenigstens die zwischen dem Hauptbremszylinder (2) und den Vorderradbremsen (9, 10) befindlichen Ventile als 3/2-Wegeventile (28a, 29a) ausgebildet sind.

6. Hydraulische Fahrzeugbremsanlage nach Anspruch 1, **dadurch gekennzeichnet, daß** wenigstens zwei der Ventile als Differenzdruckventile (28d, 29d, 30d, 31d) ausgebildet sind, deren Elektromagnete (41d, 42d) mit variablem Erregerstrom beaufschlagbar sind.

7. Hydraulische Fahrzeugbremsanlage nach Anspruch 1, **dadurch gekennzeichnet, daß** ein Steuergerät der Blockierschutzeinrichtung (2, 2a, 2b, 2c, 2d, 2e) eingerichtet ist zum Steuern der Förderleistung der Rückförderpumpen (32, 33).

8. Hydraulische Fahrzeugbremsanlage nach Anspruch 1, **dadurch gekennzeichnet, daß** den ersten oder zweiten Ventilen (28, 29; 28b, 29b; 28d, 29d) Bypässe (45, 46) mit zum Hauptbremszylinder (2) öffenbaren Rückschlagventilen (39) parallel geschaltet sind.

9. Hydraulische Fahrzeugbremsanlage nach Anspruch 1, **dadurch gekennzeichnet, daß** zur Antriebsschlupfregelung von den Vorderradbremsen (9, 10) zugeordneten Antriebsrädern zwischen den Hauptbremszylinder (2) und das jeweils erste elektrisch steuerbare Ventil (28, 29; 28b, 29b; 28d, 29d; 28f, 29f; 28g, 29g) sowie den Hauptbremszylinder (2) und einen jeweiligen Ausgang (50) der jeweiligen Rückförderpumpe (32, 33) eine dritte elektrisch steuerbare Ventilanordnung (52, 53) eingebaut ist, die normalerweise offen steht und im Antriebsschlupfregelbetrieb wenigstens bedingt geschlossen ist, daß zwischen dem Hauptbremszylinder (2) und einem Eingang (49) jeder Rückförderpumpe (32, 33) und einer Vorderradbremse (7, 8) und dem jeweiligen Eingang (49) jeder Rückförderpumpe (32, 33) eine vierte Ventilanordnung (60, 61; 60g, 61g) eingebaut ist zum Verbinden der jeweiligen Vorderradbremse (7, 8) mit dem jeweiligen Eingang (49) der jeweiligen Rückförderpumpe (32, 33) im mittels des Bremspedals (4) bewirkten Bremsbetrieb und zum Verbinden des mit einem Vorratsbehälter (3) kombinierten Hauptbremszylinders (2) mit dem jeweiligen Eingang (49) der jeweiligen Rückförderpumpe (32, 33) bei gleichzeitigem Trennen der jeweiligen Vorderradbremse (7, 8) vom jeweiligen Eingang (49) der jeweiligen Rückförderpumpe (32, 33).

10. Hydraulische Fahrzeugbremsanlage nach Anspruch 9, **dadurch gekennzeichnet, daß** die vierte Venilanordnung (60, 61) ein normal geschlossenes elektrisch elektrisch steuerbares 2/2-Wegeventil (63) zwischen dem Hauptbremszylinder (2) und dem Eingang (49) und ein normal offenes elektrisch steuerbares 2/2-Wegeventil (62) zwischen der jeweiligen Vorderradbremse (7, 8) und dem Eingang (49) der jeweiligen Rückförderpumpe (32, 33) enthält.

11. Hydraulische Fahrzeugbremsanlage nach Anspruch 9, dadruch gekennzeichnet, daß die vierte Ventilanordnung (60g, 61g) als ein hydraulisch steuerbares 3/2-Wegeventil (60g, 61g, 75, 77, 78, 79, 74) ausgebildet ist, das in seiner von einer Feder (74) bestimmten Grundstellung den Hauptbremszylinder (2) mit dem Eingang(49) der jeweiligen Rückförderpumpe (32, 33) verbindet und gleichzeitig die jeweilige Vorderradbremse (7, 8) von dem Eingang (49) trennt und einen Steuereingang (75) aufweist, der an den Hauptbremszylinder (2) angeschlossen ist, derart, daß bei Betätigung des Bremspedals (4) und dadurch im Hauptbremszylinder (2)ausgehendem Druck die jeweilige Vorderradbremse (7, 8) mit dem zugeordneten Eingang (49) der zugeordneten Rückförderpumpe (32) verbunden ist.

12. Hydraulische Fahrzeugbremsanlage nach einem der Ansprüche 9 bis 11, **dadurch gekennzeichnet, daß** die dritte Ventilanordnung (52, 53) als ein Sitzventil ausgebildet und zwischen einem Ventilsitzschließglied und einem Elektromagnet (54) eine Druckdifferenzfeder (56) aufweist.

13. Hydraulische Fahrzeugbremsanlage nach einem der Ansprüche 9 bis 11, **dadurch gekennzeichnet, daß** das jeweils zwischen einem Radbremszylinder (13, 14) einer Hinterradbremse (11, 12) und dem zugeordneten ersten Ventil (28f, 29f; 28g, 29g) angeordnete Rückschlagventil, das zu dem jeweils ersten Ventil (28f, 29f; 28g, 29g) öffenbar ist, als ein federloses Rückschlagventil (37f, 38f) ausgebildet ist.

14. Verfahren zum Betreiben einer hydraulischen Fahrzeugbremsanlage (1; 1a; 1b; 1c; 1d; 1e; 1f; 1g) mit einem zweikreisigen Hauptbremszylinder (2), mit zwei Bremskreisen (I, II) in Diagonal-Aufteilung für zwei Vorderradbremsen (7, 8) und zwei Hinterradbremsen (11, 12) und mit einer in die Bremskreise (I, II) eingebauten Blockierschutzeinrichtung (15, 15a, 15b, 15c, 15d, 15e, 15f, 15g), die je Bremskreis (I, II) eine Rückförderpumpe (32, 33) mit einem Eingang (49) in Form eines Eingangsrückschlagventils und einem Ausgang (50) in Form eines Ausgangsrückschlagventils und ein erstes und ein zweites elektrisch steuerbares Ventil (28, 29, 30, 31), die normal offen stehen, aufweist, wobei zwischen dem Hauptbremszylinder (2) und der jeweiligen Vorderradbremse (7, 8) das erste Ventil (28, 29) angeordnet ist und wobei das zweite Ventil (30, 31) mit der jeweiligen Hinterradbremse (11, 12) verbunden ist und dabei zwischen der jeweiligen Hinterradbremse (11, 12) und dem Hauptbremszylinder (2) angeordnet ist und wobei wenigstens die Hinterradbremsen (11, 12) über Drosseln (35, 36) mit den Eingängen (49) der Rückförderpumpen (32, 33) verbunden sind und zum Steuern der ersten und der zweiten Ventile (28, 29, 30, 31) und der Rückförderpumpen (32, 33) im Blockierschutzbetrieb ein Steuergerät (16, 16b, 16c, 16d 16e, 16f, 16g) vorgesehen ist, wobei jeweils in Reihe zu der der Hinterradbremse (11, 12) zugeordneten Drossel (35, 36) ein in Richtung des Eingangs (49), der in Form eines Eingangsrückschlagventils ausgebildet ist, der Rückförderpumpe (32, 33) öffenbares Rückschlagventil (37, 38) eingebaut ist (nach Anspruch 1), wobei dann, wenn beim Bremsen eine den Hinterrädern zugeordnete vorgewählte Bremsschlupfgrößenschwelle erreicht ist, in einem Verfahrensschritt mittelbar über das Steuergerät (16, 16b, 16c, 16d, 16e, 16f, 16g) die den Hinterrädern zugeordneten zweiten Ventile (30, 31) geschlossen werden.

## Claims

1. Hydraulic vehicle brake system (1; 1a; 1b; 1c; 1d; 1e; 1f; 1g) with a two-circuit brake master cylinder (2), with two brake circuits (I, II) in a diagonal allocation for two front-wheel brakes (7, 8) and two rear-wheel brakes (11, 12), and with an anti-lock device (15, 15a, 15b, 15c, 15d, 15e, 15f, 15g) which is incorporated into the brake circuits (I, II) and which has, for each brake circuit (I, II), a return pump (32, 33) with an inlet (49) in the form of an inlet non-return valve and an outlet (50) in the form of an outlet non-return valve and a first and a second electrically controllable valve (28, 29, 30, 31) which are normally open, the first valve (28, 29) being arranged between the brake master cylinder (2) and the relevant front-wheel brake (7, 8), the second valve (30, 31) being connected to the relevant rear-wheel brake (11, 12) and being arranged between the relevant rear-wheel brake (11, 12) and the brake master cylinder (2), and at least the rear-wheel brakes (11, 12) being connected to the inlets (49), in the form of inlet non-return valves, of the return pumps (32, 33) via throttles (35, 36), and a control unit (16, 16b, 16c, 16d, 16e, 16f, 16g) being provided for controlling the first and the second valves (28, 29, 30, 31) and the return pumps (32, 33) in anti-lock mode, **characterized in that** a non-return valve (37, 38) openable in the direction of the inlet (49), which is designed in the form of an inlet non-return valve, of the return pump (32, 33) is incorporated in each case in series with the throttle (35, 36) assigned to the rear-wheel brake (11, 12).

2. Hydraulic vehicle brake system according to Claim 1, **characterized in that** at least one of the valves (28, 29, 30, 31) is designed as a 2/2-way valve.

3. Hydraulic vehicle brake system according to Claim 2, **characterized in that** a further throttle (40) is connected in series with the 2/2-way valve (28, 29, 30, 31).

4. Hydraulic vehicle brake system according to Claim 1, **characterized in that** at least one of the valves is designed as a continuous directional valve (28b, 29b, 30b, 31b).

5. Hydraulic vehicle brake system according to Claim 1, **characterized in that** at least the valves located between the brake master cylinder (2) and the front-wheel brakes (9, 10) are designed as 3/2-way valves (28a, 29a).

6. Hydraulic vehicle brake system according to Claim 1, **characterized in that** at least two of the valves are designed as differential-pressure valves (28d, 29d, 30d, 31d), the electromagnets (41d, 42d) of which can have a variable exciting current applied to them.

7. Hydraulic vehicle brake system according to Claim 1, **characterized in that** a control unit of the anti-lock device (2, 2a, 2b, 2c, 2d, 2e) is designed for controlling the feed capacity of the return pumps (32, 33).

8. Hydraulic vehicle brake system according to Claim 1, **characterized in that** bypasses (45, 46) with non-return valves (39) openable towards the brake master cylinder (2) are connected in parallel with the first or second valves (28, 29; 28b, 29b; 28d, 29d).

9. Hydraulic vehicle brake system according to Claim 1, **characterized in that**, for the control of traction slip of driving wheels assigned to the front-wheel brakes (9, 10), there is incorporated between the brake master cylinder (2) and the respective first electrically controllable valve (28, 29; 28b, 29b; 28d, 29d; 28f, 29f; 28g, 29g) as well as the brake master cylinder (2) and a respective outlet (50) of the relevant return pump (32, 33) a third electrically controllable valve arrangement (52, 53) which is normally open and which is closed at least to a limited extent in the traction-slip control mode, and **in that** a fourth valve arrangement (60, 61; 60g, 61g) is incorporated between the brake master cylinder (2) and an inlet (49) of each return pump (32, 33) and a front-wheel brake (7, 8) and the respective inlet (49) of each return pump (32, 33), for connecting the respective front-wheel brake (7, 8) to the respective inlet (49) of the relevant return pump (32, 33) in the braking mode brought about by means of the brake pedal (4) and for connecting the brake master cylinder (2), combined with a reservoir (3), to the respective inlet (49) of the relevant return pump (32, 33), whilst at the same time separating the respective front-wheel brake (7, 8) from the respective inlet (49) of the relevant return pump (32, 33).

10. Hydraulic vehicle brake system according to Claim 9, **characterized in that** the fourth valve arrangement (60, 61) contains a normally closed, electrically controllable 2/2-way valve (63) between the brake master cylinder (2) and the inlet (49) and a normally open, electrically controllable 2/2-way valve (62) between the respective front-wheel brake (7, 8) and the inlet (49) of the relevant return pump (32, 33).

11. Hydraulic vehicle brake system according to Claim 9, **characterized in that** the fourth valve arrangement (60g, 61g) is designed as a hydraulically controllable 3/2-way valve (60g, 61g, 75, 77, 78, 79, 74) which, in its basic position determined by a spring (74), connects the brake master cylinder (2) to the inlet (49) of the relevant return pump (32, 33) and simultaneously separates the respective front-wheel brake (7, 8) from the inlet (49) and which has a control inlet (75) connected to the brake master cylinder (2) in such a way that, when the brake pedal (4) is actuated and pressure is thereby generated in the brake master cylinder (2), the respective front-wheel brake (7, 8) is connected to the associated inlet (49) of the associated return pump (32).

12. Hydraulic vehicle brake system according to one of Claims 9 to 11, **characterized in that** the third valve arrangement (52, 53) is designed as a seat valve and has a differential-pressure spring (56) between a valve-seat closing member and an electromagnet (54).

13. Hydraulic vehicle brake system according to one of Claims 9 to 11, **characterized in that** the non-return valve, which is arranged in each case between a wheel-brake cylinder (13, 14) of a rear-wheel brake (11, 12) and the associated first valve (28f, 29f; 28g, 29g) and which can be opened towards the respective first valve (28f, 29f; 28g, 29g), is designed as a springless non-return valve (37f, 38f).

14. Method for operating a hydraulic vehicle brake system (1; 1a; 1b; 1c; 1d; 1e; 1f; 1g) with a two-circuit brake master cylinder (2), with two brake circuits (I, II) in a diagonal allocation for two front-wheel brakes (7, 8) and two rear-wheel brakes (11, 12), and with an anti-lock device (15, 15a, 15b, 15c, 15d, 15e, 15f, 15g) which is incorporated into the brake circuits (I, II) and which has, for each brake circuit (I, II), a return pump (32, 33) with an inlet (49) in the form of an inlet non-return valve and an outlet (50) in the form of an outlet non-return valve and a first and a second electrically controllable valve (28, 29, 30, 31) which are normally open, the first valve (28, 29) being arranged between the brake master cylinder (2) and the relevant front-wheel brake (7, 8), and the second valve (30, 31) being connected to the relevant rear-wheel brake (11, 12) and being arranged between the relevant rear-wheel brake (11, 12) and the brake master cylinder (2), and at least the rear-wheel brakes (11, 12) being connected to the inlets (49) of the return pumps (32, 33) via throttles (35, 36), and a control unit (16, 16b, 16c, 16d, 16e, 16f, 16g) being provided for controlling the first and the second valves (28, 29, 30, 31) and the return pumps (32, 33) in anti-lock mode, in which a non-return valve (37, 38) openable in the direction of the inlet (49), which is designed in the form of an inlet non-return valve, of the return pump (32, 33) is incorporated in each case in series with the throttle (35, 36) assigned to the rear-wheel brake (11, 12) (according to Claim 1), then, when, during braking, a preselected brake-slip size threshold assigned to the rear wheels is reached, in one method step the second values (30, 31) assigned to the rear wheels are closed indirectly via the control unit (16, 16b, 16c, 16d, 16e, 16f, 16g).

## Revendications

1. Installation de freinage hydraulique de véhicules (1; 1a; ; 1b ; 1e; 1d ; 1e ; 1f ; 1g) comportant un maître cylindre (2) à double circuit, deux circuits de frein (I, II) en diagonale pour deux freins avant (7, 8) et deux freins de roue arrière (11, 12) ainsi qu'une installation anti-blocage (15, 15a, 15b, 15c, 15d, 15e, 15f, 15g), montée dans les circuits de frein (I, II), dans laquelle
chaque circuit de frein (I, II) comporte une pompe de refoulement (32, 33) avec une entrée (49) sous la forme d'un clapet anti-retour d'entrée et une sortie (50) sous la forme d'un clapet anti-retour de sortie ainsi qu'une première et une seconde vannes à commande électrique (28, 29, 30, 31) normalement ouvertes,
la première vanne (28, 29) se trouve entre le maître cylindre de frein (2) et le frein de roue avant respectif (7, 8), la seconde vanne (30, 31) est reliée aux freins de roue arrière (11, 12) respectifs et se situe entre le frein de roue arrière (11, 12) respectif et le maître cylindre (2), et
au moins les freins de roue arrière (11, 12) sont reliés aux entrées (49) par des organes d'étranglement (35, 36) sous la forme de clapets anti-retour d'entrée des pompes de refoulement (32, 33), et un appareil de commande (16, 16b, 16c, 16d, 16e, 16f, 16g) commande les premières et secondes vannes (28, 29, 30, 31) et les pompes de refoulement (32, 33) en mode anti-blocage,
**caractérisée en ce qu'**
un clapet anti-retour (37, 38) est monté chaque fois en série avec l'organe d'étranglement (35, 36) associé aux freins de roue arrière (11, 12), ce clapet s'ouvrant en direction de l'entrée (49) constituée par un clapet anti-retour d'entrée de la pompe de refoulement (32, 33).

2. Installation de freinage hydraulique de véhicules selon la revendication 1,
**caractérisée en ce qu'**
au moins l'une des vannes (28, 29, 30, 31) est un distributeur à tiroir à 2/2 voies.

3. Installation de freinage hydraulique de véhicules selon la revendication 2,
**caractérisée en ce qu'**
un autre organe d'étranglement (40) est branché en série sur la vanne à distributeur à 2/2 voies (28, 29, 30, 31).

4. Installation de freinage hydraulique de véhicules selon la revendication 1,
**caractérisée en ce qu'**
au moins l'une des vannes est un distributeur à tiroir continu (28b, 29b, 30b, 31b).

5. Installation de freinage hydraulique de véhicules selon la revendication 1,
**caractérisée en ce qu'**
au moins les vannes entre le maître cylindre de frein (2) et les freins de roue avant (9, 10) sont des distributeurs à tiroir à 3/2 voies (28a, 29a).

6. Installation de freinage hydraulique de véhicules selon la revendication 1,
**caractérisée en ce qu'**
au moins deux des vannes sont des vannes à pression différentielle (28d, 29d, 30d, 31d) dont les électro-aimants (41d, 42d) peuvent être commandés par un courant d'excitation variable.

7. Installation de freinage hydraulique de véhicules selon la revendication 1,
**caractérisée par**
un appareil de commande de l'installation anti-blocage (2, 2a, 2b, 2c, 2d, 2e) pour commander le débit des pompes de refoulement (32, 33).

8. Installation de freinage hydraulique de véhicules selon la revendication 1,
**caractérisée en ce qu'**
en parallèle des premières ou des secondes vannes (28, 29 ; 28b, 29b ; 28d ; 29d) il y a des dérivations (45, 46) avec des clapets anti-retour (39) s'ouvrant vers le maître cylindre de frein (2).

9. Installation de freinage hydraulique de véhicules selon la revendication 1,
**caractérisée en ce que**
pour la régulation anti-patinage d'entraînement des freins de roue avant (9, 10) associés aux roues motrices, entre le maître cylindre de frein (2) et chaque fois la première vanne à commande électrique (28, 29 ; 28b, 29b ; 28d, 29d ; 28f, 29f ; 28g, 29g), ainsi qu'entre le maître cylindre de frein (2) et chaque fois une sortie (50) de la pompe de refoulement respective (32, 33), il est prévu un troisième dispositif de vannes (52, 53) à commande électrique normalement ouvert et fermé de manière conditionnelle en mode anti-patinage,
entre le maître cylindre de frein (2) et une entrée (49) de chaque pompe de refoulement (32, 33) et un frein de roue avant (7, 8) et l'entrée respective (49) de chaque pompe de refoulement (32, 33), il est prévu un quatrième dispositif de vannes (60, 61 ; 60g, 61g) pour relier le frein de roue avant respectif (7, 8) à l'entrée respective (49) de la pompe de refoulement respective (32, 33) en mode de freinage commandé par la pédale de frein (4), et pour relier le maître cylindre de frein (2) combiné au réservoir (3) avec l'entrée respective (49) de la pompe de refoulement (32, 33) correspondante, tout en coupant le frein de roue avant (7, 8) respectif de l'entrée respective (49) de la pompe de refoulement correspondante (32, 33).

10. Installation de freinage hydraulique de véhicules selon la revendication 9,
**caractérisée en ce que**
le quatrième dispositif de vannes (60, 61) comprend un distributeur à tiroir à 2/2 voies (63), à commande électrique, normalement fermé, monté entre le maître cylindre de frein (2) et l'entrée (49), ainsi qu'un distributeur à tiroir à 2/2 voies (62) à commande électrique s'ouvrant normalement, monté entre le frein de roue avant respectif (7, 8) et l'entrée (49) de la pompe de refoulement respective (32, 33).

11. Installation de freinage hydraulique de véhicules selon la revendication 9,
**caractérisée en ce que**
le quatrième dispositif de vannes (60g, 61g) est un distributeur à tiroir à 3/2 voies (60g, 61g, 75, 77, 78, 79, 74), à commande hydraulique, qui, dans sa position de base définie par un ressort (74), relie le maître cylindre de frein (2) à l'entrée (49) de la pompe de refoulement respective (32, 33) tout en coupant en même temps le frein de roue avant (7, 8) correspondant par rapport à l'entrée (49) et comporte une entrée de commande (75) reliée au maître cylindre de frein (2), pour qu'en cas d'actionnement de la pédale de frein (4) et de la pression ainsi fournie dans le maître cylindre de frein (2), le frein de roue avant (7, 8) respectif soit relié à l'entrée correspondante (49) de la pompe de refoulement (32) associée.

12. Installation de freinage hydraulique de véhicules selon l'une quelconque des revendications 9 à 11,
**caractérisée en ce que**
le troisième dispositif de vannes (52, 53) est une soupape à siège et un ressort à différence de pression (56) est monté entre l'organe d'obturation de la soupape à siège et un électro-aimant (54).

13. Installation de freinage hydraulique de véhicules selon l'une quelconque des revendications 9 à 11,
**caractérisée en ce que**
le clapet anti-retour installé entre chaque fois un cylindre de frein de roue (13, 14) d'un frein de roue arrière (11, 12) et la première vanne associée (28f, 29f ; 28g, 29g), ce clapet anti-retour s'ouvrant chaque fois vers la première vanne (28f, 29f ; 28g, 29g), est un clapet anti-retour (37f, 38f) sans ressort.

14. Procédé de mise en oeuvre d'une installation hydraulique de frein de véhicules (1 ; 1a ; 1b ; 1c ; 1d ; 1e ; 1f; 1g), comportant un maître cylindre de frein (2) à double circuit de frein,
les deux circuits de frein (I, II) étant montés en diagonale pour deux freins de roue avant (7, 8), et deux freins de roue arrière (11, 12) ainsi qu'une installation anti-blocage (15, 15a, 15b, 15c, 15d, 15e, 15f, 15g) montée dans les circuits de frein (I, II), ayant pour chaque circuit de frein (I, II) une pompe de refoulement (32, 33) avec une entrée (49) constituée par un clapet anti-retour d'entrée et une sortie (50) constituée par un clapet anti-retour de sortie ainsi qu'une première et une seconde électrovannes (28, 29, 30, 31) normalement ouvertes, avec la première vanne (28, 29) située entre le maître cylindre de frein (2) et le frein de roue avant respectif (7, 8), et la seconde vanne (30, 31) reliée aux freins de roue arrière respectifs (11, 12) et situé entre chaque frein de roue arrière (11, 12) respectif et le maître cylindre (2), et au moins des freins de roue arrière (11, 12) reliés par des organes d'étranglement (35, 36) aux entrées (49) des pompes de refoulement (32, 33), avec un appareil de commande (16, 16b, 16c, 16d, 16e, 16f, 16g) pour commander la première et la seconde vannes (28, 29, 30, 31) et les pompes de refoulement (32, 33 ) dans le mode anti-blocage et, en série avec des organes d'étranglement (35, 36) des freins de roue arrière (11, 12), un clapet anti-retour (37, 38) s'ouvrant dans la direction de l'entrée (49) du clapet anti-retour d'entrée de la pompe de refoulement (32, 33),
**caractérisé en ce que**
si lors du freinage, on atteint un seuil d'amplitude de patinage au freinage présélectionné, attribué aux roues arrière, dans une étape de procédé, indirectement par l'appareil de commande (16, 16b, 16c, 16d, 16e, 16f, 16g), on ferme les secondes vannes (30, 31) associées aux roues arrière.
